# EUROPÄISCHE PATENTSCHRIFT

(11) **EP 2 753 426 B1**
(45) Veröffentlichungstag und Bekanntmachung des Hinweises auf die Patenterteilung: **12.10.2016**
(21) Anmeldenummer: 12750785.3
(22) Anmeldetag: 28.08.2012
(51) Int. Cl.: B01L 3/00

(54) **EINLASSVENTIL FÜR KAMMERSYSTEME UND PROBENBEHÄLTER SOWIE KAMMERSYSTEME UND PROBENBEHÄLTER MIT DERARTIGEN EINLASSVENTILEN**
INLET VALVE FOR CHAMBER SYSTEMS AND SAMPLE CONTAINERS, AND CHAMBER SYSTEMS AND SAMPLE CONTAINERS HAVING SUCH INLET VALVES
SOUPAPE D'ADMISSION POUR DES SYSTÈMES DE CHAMBRES ET RÉCIPIENTS À ÉCHANTILLONS AINSI QUE SYSTÈMES DE CHAMBRES DOTÉS DE RÉCIPIENTS À ÉCHANTILLONS DOTÉS DE TELLES SOUPAPES D'ADMISSION

(30) Priorität: 06.09.2011 CH 14622011
(43) Veröffentlichungstag der Anmeldung: 16.07.2014
(60) Teilanmeldung: 16185513.5
(73) Patentinhaber: Tecan Trading AG, 8708 Männedorf (CH)
(72) Erfinder: KNOPPKE, Marina, CH-8620 Wetzikon (CH); ITEN, Thomas, CH-8046 Zürich (CH); BIRKNER, Nico, CH-8706 Meilen (CH); WIGGLI, Markus, CH-8632 Tann (CH)
(74) Vertreter: OK pat AG
(86) Internationale Anmeldenummer: PCT/EP2012/066704
(87) Internationale Veröffentlichungsnummer: WO 2013/034469

(56) Entgegenhaltungen:
- EP-A2- 0 841 094
- WO-A1-92/20449
- DE-C1- 10 105 753
- US-A1- 2002 130 100

## Beschreibung

Die Erfindung betrifft ein Einlassventil zum Beschicken eines Innenraums eines Kammersystems oder Probenbehälters mit einer Flüssigkeit. Das Einlassventil ist zum Zugeben der Flüssigkeit mittels einer Laborpipette ausgebildet und umfasst eine erste Pipetierachse. Überdies umfasst das Einlassventil eine Einlassöffnung und es ist als diese Einlassöffnung selbsttätig wiederverschliessend ausgebildet. Die Erfindung betrifft zudem mit derartigen Einlassventilen ausgerüstete Kammersysteme zum Behandeln von Proben sowie entsprechende Probenbehälter mit nur einer Kammer.

Selbstschliessende Einlassventile für Probenbehälter sind aus dem Stand der Technik bekannt. Das Dokument WO 92/20449 A1 offenbart einen dichtenden Deckel mit einem Rückschlagventil. Dabei handelt es sich um einen Stopfen für Probenröhrchen (z.B. für Blutproben), der so über die obere Öffnung eines Probenröhrchens gestülpt wird, dass der obere Rand des Röhrchens dichtend in eine umlaufende Nut des Stopfens eingreift. Der Stopfen hat auf seiner Oberseite eine mittige Vertiefung, die gegen unten durch zwei aufeinander gerichtete Teilflansche abgeschlossen ist. Diese Teilflansche berühren sich entlang einer Dichtlinie, die sich gerade und über beinahe den ganzen Durchmesser der mittigen Vertiefung erstreckt. Wird eine Pipette oder Nadel in den Bereich dieser Dichtlinie abgesenkt, so drängt sie die beiden elastischen Teilflansche auseinander, wobei ein Durchgangsloch im Stopfen entsteht. Beim Zurückziehen der Pipette oder Nadel bewegen sich die beiden Teilflansche elastisch gegeneinander und verschliessen das Durchgangsloch im Stopfen wieder. Als zusätzliches Dichtelement kann ein wegnehmbarer Deckel vorgesehen sein der in eine Nut eingreift. Dieser wegnehmbare Deckel kann auch als durchstechbare Membran ausgebildet sein.

Das Dokument DE 101 05 753 C1 offenbart einen Verschluss für Reagenzbehälter, insbesondere solche mit Schraubverschluss. Der erfindungsgemässe Verschluss umfasst einen kegelförmigen oder pyramidenförmigen Einsatz, dessen Spitze gegen das Füllgut gerichtet ist. Dieser Einsatz ist zumindest einmal und bevorzugt symmetrisch eingeschnitten, wodurch Lappen gebildet werden, die den unteren Teil des Kegels bzw. der Pyramide bis zur Spitze bilden. Eine Spritzen-Nadel oder Pipette wird mit einer Auslösehülse versehen, die als länglicher, stabförmiger Körper mit zentraler Bohrung die Nadel oder Pipettenspitze umgibt und die sich zumindest am unteren Ende gegen die Nadel oder Pipettenspitze verjüngt. Die Form der Auslösehülse und der Abstand ihres unteren Endes zum Ende der Nadelspitze oder Pipettenspitze sind an die Form des kegelförmigen oder pyramidenförmigen Einsatzes angepasst, so dass beim Einführen in den kegel- oder pyramidenförmigen Einsatz die Auslösehülse einen Auslösesteg berührt, bevor die Pipettenspitze selbst den Verschluss berühren kann.

Das Dokument US 2002/0130100 A1 offenbart eine Verschlussvorrichtung für einen Behälter, die als Doppelverschluss-Vorrichtung mit einer auf Druck reagierenden, konvexen Dichtung ausgebildet ist. Der Behälter ist z.B. ein Mikrozentrifugen-Röhrchen, das auch als "Eppendorf-Röhrchen" bezeichnet werden könnte. Weitere Offenbarungen betreffen einen Wischmechanismus; eine einstückige Konstruktion; eine manipuliersichere Konstruktion; eine Konstruktion, die einen beschränkten Luftaustausch erlaubt und trotzdem Zugang zu den Flüssigkeiten bietet sowie eine sterile Lufteinlass- und Filterkonstruktion.

Kammersysteme zum Behandeln von Proben sind ebenfalls bekannt. Dabei interessieren hier insbesondere biologische, biochemische oder chemische Proben. Beispielhafte Behandlungsmethoden umfassen das Extrahieren von Zielmolekülen, insbesondere Makromolekülen (Nukleinsäuren, Proteinen) oder von niedermolekularen Verbindungen (Vitaminen etc.), wobei die Fest-Flüssig-Extraktion bevorzugt zur Anwendung kommt. Ein typisches Kammersystem umfasst einen Innenraum, einen Deckel, einen Aussenraum und eine Transfereinrichtung. Der Innenraum zum Aufnehmen und beispielsweise Inkubieren von z.B. biologischen Proben ist zumindest teilweise von einer Innenwand umgeben und mit einem Deckel verschliessbar. Der Deckel umfasst eine zum Innenraum führende Einlassöffnung, welche eine die Einlassöffnung durchstossende, erste Pipetierachse definiert. Der Aussenraum umgibt den Innenraum zumindest teilweise. Der Aussenraum zum Sammeln von beispielsweise Lysat mit extrahierten Nukleinsäuren ist zumindest teilweise von einer Aussenwand umgeben. Die Aussenwand umfasst eine zum Aussenraum führende Pipetieröffnung, welche eine die Pipetieröffnung durchstossende, zweite Pipetierachse definiert. Die Transfereinrichtung ist zum fluidischen Verbinden des Innenraums mit dem Aussenraum ausgebildet.

Eine ähnliche Vorrichtung zum Präparieren von zytologischen Proben mit einem Innenraum, einem Deckel, einem Aussenraum und einer Transfereinrichtung (Filter) ist aus dem Dokument FR 2 878 426 bekannt. Diese Vorrichtung umfasst jedoch einen Schraubdeckel, der jeweils sowohl zum Zugeben von Proben oder Flüssigkeiten in den Innenraum als auch zum Abziehen von Flüssigkeiten aus dem Aussenraum abgenommen werden muss. Diese bekannte Vorrichtung ist deshalb nicht oder nur sehr begrenzt und mit grossem Aufwand in robotisierten bzw. automatisierten Laboranlagen verwendbar.

Ein Kammersystem zum Abtrennen von Flüssigkeiten aus Probengemischen (z.B. Lösungen oder Suspensionen) mittels Extrahieren und/oder Filtrieren, das einen Innenraum, einen Deckel, einen Aussenraum und eine Transfereinrichtung (Filter oder Gitter) umfasst, ist aus dem Dokument US 5,888,831 bekannt. Durch die exzentrische Anordnung von Innenraum und Aussenraum können mittels Eluieren und/oder Zentrifugieren aus dem Innenraum abgetrennte Flüssigkeiten aus dem Aussenraum bzw. Sammelraum über eine separate Öffnung abpipettiert werden, ohne dass das Kammersystem geöffnet oder auseinandergenommen werden müsste. Allerdings sind bei diesem Kammersystem die Einlassöffnung zum Innenraum und die Pipetieröffnung zum Aussenraum konstant offen, so dass bei einer Inkubierung von Proben bei erhöhter Temperatur und/oder über längere Zeit mit verdampfungsbedingten Flüssigkeitsverlusten gerechnet werden müsste. Die offene Konstruktion erscheint zudem anfällig für Kreuzkontaminationen.

Ein Kammersystem in der Form eines Sammel/Extraktions-Behälters ist aus dem Dokument WO 2009/012808 bekannt. Jenes Kammersystem zum Sammeln von festen forensischen Proben und zum Extrahieren von biologischem Material aus diesen forensischen Proben umfasst einen Innenraum, einen Deckel, einen Aussenraum und eine Transfereinrichtung. Der Innenraum zum Aufnehmen eines Tupfers und zum Inkubieren von biologischen Proben ist zumindest teilweise von einer Innenwand umgeben und mit einem Deckel verschliessbar. Der Deckel verschliesst eine zum Innenraum führende Einlassöffnung, welche eine die Einlassöffnung durchstossende, erste Pipetierachse definiert. Der Aussenraum umgibt den Innenraum zumindest teilweise. Der Aussenraum zum Sammeln von extrahierten Nukleinsäuren ist zumindest teilweise von einer Aussenwand umgeben. Die Aussenwand umfasst eine zum Aussenraum führende Pipetieröffnung, welche eine die Pipetieröffnung durchstossende, zweite Pipetierachse definiert. Die Transfereinrichtung ist zum fluidischen Verbinden des Innenraums mit dem Aussenraum ausgebildet. Ein alternativer Deckel verschliesst sowohl die zum Innenraum führende Einlassöffnung als auch die zum Aussenraum führende Pipetieröffnung. Diese Deckel können zwar mit einem Roboterwerkzeug eingesetzt und auch wieder entfernt werden; trotzdem verkompliziert diese Art Deckel das automatisierte Handhaben des Kammersystems.

Als ein bekanntes Beispiel für reversibel verschliessbare Probenbehälter sollen hier "Eppendorf-Tuben" oder "Eppendorf-Röhrchen" (Eppendorf AG, Hamburg, Deutschland) genannt werden. Das automatisierte Beschicken von Eppendorf-Röhrchen bedingt das Öffnen und/oder Schliessen des Deckels dieser Röhrchen, was das automatisierte Handhaben dieser Probenbehälter verkompliziert.

Aufgabe der Erfindung ist das Vorschlagen eines alternativen, sich selbsttätig wiederverschliessenden Einlassventils zum Beschicken des Innenraums eines Probenbehälters oder eines Kammersystems mit einer Flüssigkeit sowie das Vorschlagen eines mit einem derartigen Einlassventil ausgestatteten Probenbehälters oder Kammersystems zum Behandeln von Proben.

Unter dem Behandeln von Proben werden im Folgenden beliebige, ein- und/oder mehrstufige Behandlungen von irgendwelchen festen, pastösen oder flüssigen Materialproben (z.B. biologischen, biochemischen oder chemischen Proben) durch Einwirkung von Materie und/oder Energie, d.h. weiteren Stoffen und/oder z.B. Wärme verstanden. Dazu gehören z.B. chemische Verfahrensschritte und Reaktionen (z.B. Synthese), und/oder physikalische Verfahrensschritte (z.B. Extraktion von Zielmolekülen, beispielsweise durch Fest-Flüssig-Extraktion), und/oder biochemische Prozesse (z.B. Inkubieren, Lyse von Zellen, oder Polymerase-Kettenreaktion (PCR)).

Als Behandeln von Proben gilt auch das Sammeln derselben, das Aufbewahren, Lagern, Versenden bzw. Transportieren von Proben.

Die genannte Aufgabe wird gemäss einem ersten Aspekt mit einem eingangs genannten Einlassventil zum Beschicken eines Innenraums eines Kammersystems oder Probenbehälters mit einer Flüssigkeit gelöst. Das Einlassventil ist zum Zugeben der Flüssigkeit mittels einer Laborpipette ausgebildet und umfasst eine erste Pipetierachse. Überdies umfasst das Einlassventil eine Einlassöffnung und es ist als diese Einlassöffnung selbsttätig wiederverschliessend ausgebildet. Das erfindungsgemässe Einlassventil umfasst:
(a) einen in der Einlassöffnung anordenbaren und in der Richtung der ersten Pipetierachse zwischen einer Schliessposition und einer Offenposition bewegbaren Ventilkörper, dieser wiederum umfasst:
   - ein Blockierelement, das eine Dichtfläche umfasst,
   - ein Anpressteil, das zum Blockierelement beabstandet und mit einem Werkzeug beaufschlagbar ist, und das einen Flüssigkeitsdurchlass im Bereich der ersten Pipetierachse umfasst,
   - einen Hals, der das Blockierelement und das Anpressteil miteinander verbindet, und der mindestens einen offenen Durchgangsbereich umfasst, welcher einerseits in den Flüssigkeitsdurchlass des Anpressteils mündend und andererseits als sich in einen Ventilraum öffnend ausgebildet ist;
(b) einen den Ventilkörper zumindest teilweise im Bereich des Halses umgebenden Ventilraum;
(c) einen Federmechanismus, der einerseits am Anpressteil oder am Blockierelement angreifend und der andererseits an einer Wand des Kammersystems oder an einem Abschlusselement des Probenbehälters angreifend ausgebildet ist; und
(d) ein Dichtelement, das mit einer Innenwand des Kammersystems oder mit einem Abschlusselement des Probenbehälters verbunden ist.

Dabei ist der Federmechanismus so ausgebildet, dass er die Dichtfläche des Blockierelements in der Schliessposition des Ventilkörpers gegen das Dichtelement drückt. Zudem ist der Ventilkörper des Einlassventils so ausgebildet, dass er durch ein Beaufschlagen des Anpressteils gegen den Widerstand des Federmechanismus in die Offenposition bringbar ist.

Die genannte Aufgabe wird gemäss einem zweiten Aspekt mit einem Kammersystem zum Behandeln von Proben gelöst, wobei das Kammersystem umfasst:
(a) einen Innenraum, der zumindest teilweise von einer Innenwand umgeben und mit einem Abschlusselement verschliessbar ist;
(b) ein Abschlusselement, das eine zum Innenraum führende Einlassöffnung umfasst, wobei diese Einlassöffnung eine erste Pipetierachse definiert, welche die Einlassöffnung durchstösst;
(c) einen den Innenraum zumindest teilweise umgebenden Aussenraum, der zumindest teilweise von einer Aussenwand umgeben ist, wobei die Aussenwand eine zum Aussenraum führende Pipetieröffnung umfasst, die eine zweite Pipetierachse definiert; und
(d) eine Transfereinrichtung, die zum fluidischen Verbinden des Innenraums mit dem Aussenraum ausgebildet ist.
Das erfindungsgemässe Kammersystem umfasst ein bereits definiertes, die Einlassöffnung umfassendes Einlassventil zum Zugeben der Flüssigkeit mittels einer Laborpipette.

Die genannte Aufgabe wird gemäss einem dritten Aspekt mit einem Probenbehälter zum Aufbewahren oder Behandeln von Proben gelöst, wobei der Probenbehälter umfasst:
(a) einen Innenraum, der zumindest teilweise von einer Innenwand umgeben und mit einem Abschlusselement verschliessbar ist,
(b) ein Abschlusselement, das eine zum Innenraum führende Einlassöffnung umfasst, wobei diese Einlassöffnung eine erste Pipetierachse definiert, welche die Einlassöffnung durchstösst.
Der erfindungsgemässe Probenbehälter umfasst ein bereits definiertes, die Einlassöffnung umfassendes Einlassventil zum Zugeben der Flüssigkeit mittels einer Laborpipette.

Dieser eigenständige Probenbehälter mit nur einer Kammer hat oberflächlich gesehen eine gewisse Ähnlichkeit mit einem sogenannten Eppendorf-Reaktionsgefäss. Diese auch als Eppendorf-Röhrchen bezeichneten Probe- und Analysenbehälter mit einem konischen Unterteil und einer Grösse von z.B. 1.5 ml bestehen aus Polypropylen und weisen einen über eine Lasche verbundenen Deckel auf. Der erfindungsgemässe Probenbehälter unterscheidet sich davon durch das im Deckel integrierte Einlassventil, durch welches ohne Abnehmen des Deckels eine Flüssigkeit in den Innenraum pipettiert werden kann, und welches sich selbsttätig wieder dichtend schliesst.

Weiterführende und erfinderische Merkmale ergeben sich jeweils aus den abhängigen Ansprüchen.

Das erfindungsgemässe Einlassventil, Kammersystem zum Behandeln von Proben, bzw. der erfindungsgemässe Probenbehälter werden nun anhand der beiliegenden, schematischen Zeichnungen und mittels beispielhafter Ausführungsformen näher erläutert, ohne dass diese den Umfang der vorliegenden Erfindung einschränken sollen. Dabei zeigt:
- Fig. 1: eine 3D-Darstellung eines Kammersystems gemäss einer ersten Ausführungsform.
- Fig. 2: Vertikalschnitte durch ein Kammersystem gemäss der ersten Ausführungsform von Fig. 1, wobei:
Fig. 2A den Deckel des Kammersystems in der nicht eingesetzten Situation wie in Fig. 1 beim Einlegen einer Probe in den Innenraum;
Fig. 2B den Deckel des Kammersystems in der eingesetzten Situation mit dem Einlassventil in der Schliessposition;
Fig. 2C das Einlassen von z.B. Lyse-Puffer-Flüssigkeit durch den Deckel des Kammersystems in der eingesetzten Situation mit dem Einlassventil in der Offenposition;
Fig. 2D das Inkubieren der Probe im Innenraum mit dem Einlassventil in der Schliessposition; und
Fig. 2E das Abpipettieren von z.B. Lysat aus der Aussenkammer zeigt;
- Fig. 3: einen Detailschnitt durch das Dichtelement, das in Fig. 2D mit einem Kreis markiert ist;
- Fig. 4: einen Horizontalschnitt durch das Kammersystem mit Unteransicht des geöffneten Deckels entsprechend der Schnittlinie H--H in Fig. 2A;

- Fig. 5: Vertikalschnitte durch ein Kammersystem gemäss einer zweiten Ausführungsform mit dem Deckel des Kammersystems in der eingesetzten Situation und mit dem Einlassventil in der Schliessposition, wobei:
Fig. 5A einen Schnitt entsprechend der Schnittlinie A--A in Fig. 6; und
Fig. 5B einen Schnitt entsprechend der Schnittlinie B--B in Fig. 6 zeigt;
- Fig. 6: eine Draufsicht auf ein Kammersystem gemäss der zweiten Ausführungsform mit dem Deckel des Kammersystems in der eingesetzten Situation und mit dem Einlassventil in der Schliessposition, wobei die Schnittlinien für die Vertikalschnitte von Fig. 5 gezeigt sind;
- Fig. 7: eine Seitenansicht einer offenen, einstückig gefertigten ProbenbehälterDeckel-Kombination mit nur einer Kammer gemäss einer ersten Ausführungsform, wobei die Kammer im Wesentlichen dem Innenraum des Kammersystems gemäss der zweiten Ausführungsform von Fig. 5 und 6 entspricht;
- Fig. 8: eine Draufsicht auf diese offene, einstückig gefertigte Probenbehälter-Deckel-Kombination von Fig. 7;
- Fig. 9: ein Kammersystem gemäss einer dritten Ausführungsform, wobei
Fig. 9A einen Vertikalschnitt quer durch das Kammersystem zeigt, bei dem das am Einschraubdeckel angeordnete Einlassventil in einer Schliessstellung gezeichnet ist;
Fig. 9B einen Vertikalschnitt längs durch das Kammersystem zeigt, bei dem das am Einschraubdeckel angeordnete Einlassventil ebenfalls in der Schliessstellung gezeichnet ist; und
Fig. 9C eine 3D-Darstellung eines einstückig hergestellten Ventilelements dieses Einlassventils zeigt;
- Fig. 10: eine Draufsicht auf ein entsprechendes Mikroplatten-Tray (MikroplattenTräger) mit eingesetzten Kammersystemen gemäss Fig. 1 bis 4, wobei alle ersten und zweiten Pipettierachsen der array-artig (matrix-artig) angeordneten Kammersysteme auf den Kreuzungspunkten eines orthogonalen Gitters liegen, das der Anordnung von 96 Wells (Töpfchen) einer Standard-Mikroplatte gemäss ANSI-Standard entspricht;
- Fig. 11: eine 3D-Darstellung eines entsprechenden Mikroplatten-Trays mit eingesetzten Probenbehälter-Deckel-Kombinationen mit nur einer Kammer gemäss Fig. 7, wobei alle ersten Pipettierachsen der jeweils gleich angeordneten Probenbehälter auf den Kreuzungspunkten eines orthogonalen Gitters liegen, das der Anordnung von 96 Wells einer Standard-Mikroplatte gemäss ANSI-Standard entspricht;
- Fig. 12: einen schematischen Vertikalschnitt durch das sich selbsttätig wiederverschliessende, geschlossene Einlassventil zum Beschicken des Innenraums eines Probenbehälters oder eines Kammersystems mit einer Flüssigkeit, wobei auf der linken Seite die Situation in den Figuren 1 bis 8 und auf der rechten Seite die Situation in der Figur 9 verdeutlicht ist;
- Fig. 13: einen Vertikalschnitt durch eine zweite Ausführungsform eines erfindungsgemässen Probenbehälters mit einem über eine elastische Lasche verbundenen Deckel, in dem ein separat hergestellter Ventilkörper zur Vervollständigung des erfindungsgemässen, sich selbsttätig wiederverschliessende Einlassventils anordenbar ist, wobei:
Fig. 13A den geöffneten Probenbehälter mit Innenraum und Deckel, sowie einen in den Deckel einzusetzenden Ventilkörper;
Fig. 13B den geschlossenen Probenbehälter mit dem Ventilkörper in der Schliessposition; und
Fig. 13C den geschlossenen Probenbehälter mit dem Ventilkörper in der Offenposition zeigt;
- Fig. 14: einen Vertikalschnitt durch eine dritte Ausführungsform eines erfindungsgemässen Probenbehälters mit einem über eine elastische Lasche verbundenen Deckel, dem über eine weitere elastische Lasche ein mit dem Deckel und dem Probenbehälter einstückig hergestellter Ventilkörper anhängt, wobei:
Fig. 14A den geöffneten Probenbehälter mit Innenraum, Deckel und Ventilkörper;
Fig. 14B den geöffneten Probenbehälter mit Innenraum und dem in den Deckel eingesetzten Ventilkörper;
Fig. 14C den geschlossenen Probenbehälter mit dem Ventilkörper in der Schliessposition; und
Fig. 14D den geschlossenen Probenbehälter mit dem Ventilkörper in der Offenposition zeigt.

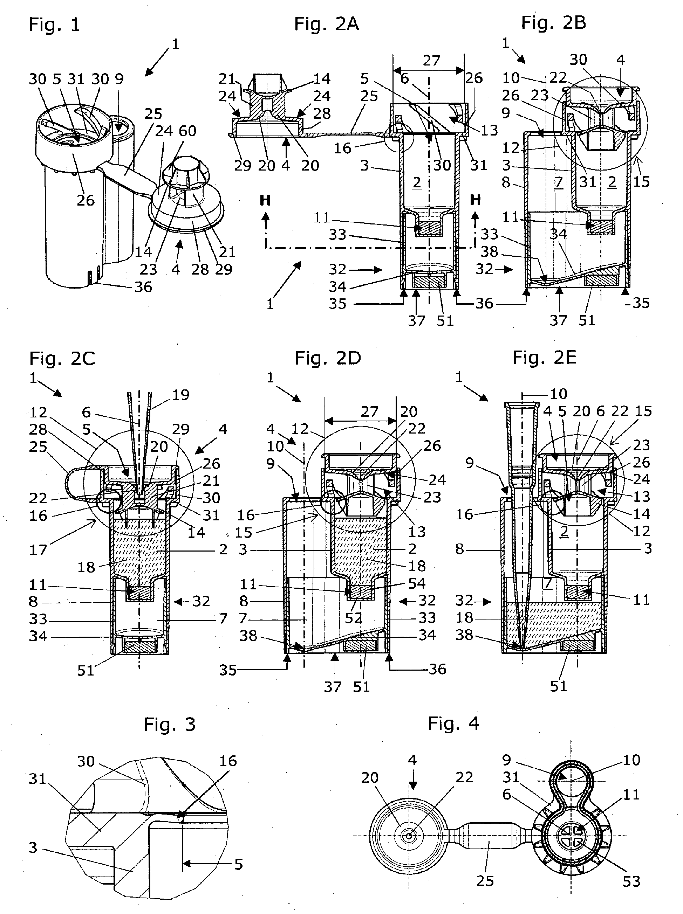

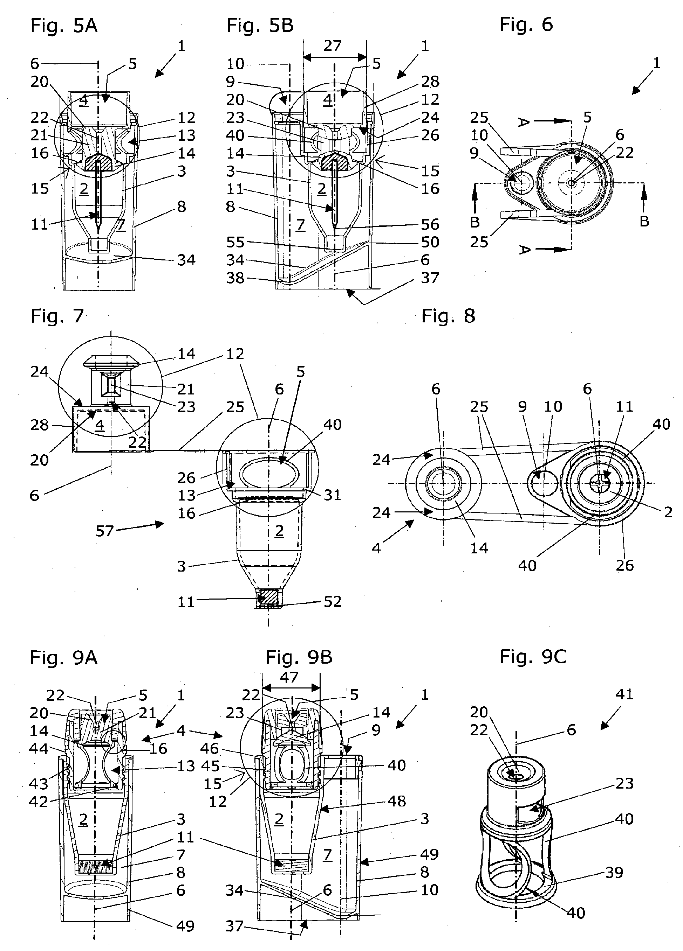

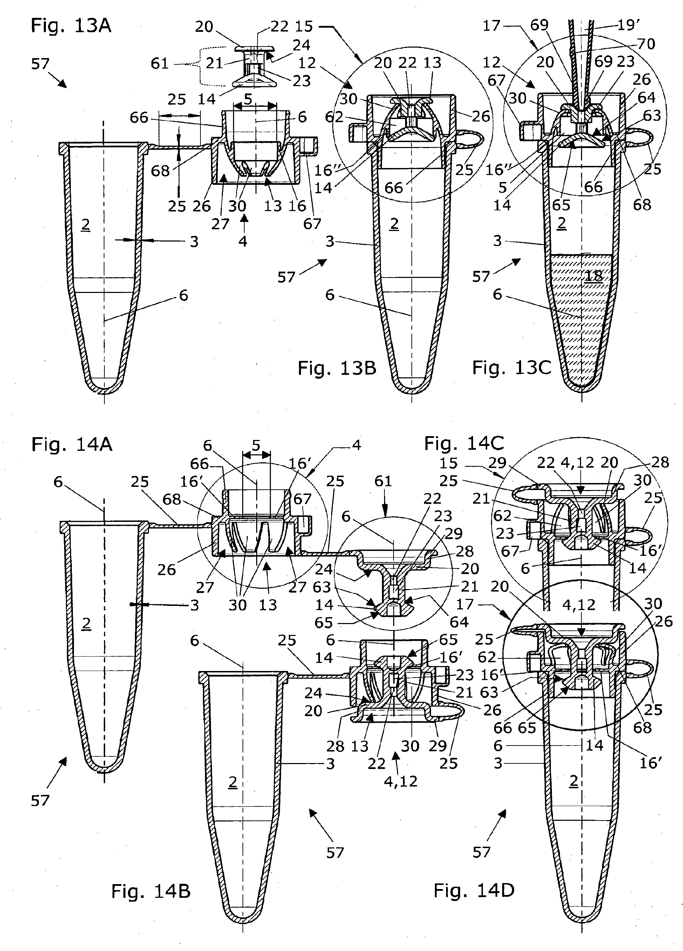

Vor dem Erläutern der Details sollen vorab zum besseren Überblick über die Erfindung die verschiedenen Ausführungsformen des erfindungsgemässen Einlassventils, Kammersystems oder Probenbehälters entsprechend den Ausführungsformen der wesentlichen Komponenten und in Bezug auf die Figuren definiert werden:
- Einlassventil 12
   - erste Ausführungsform gemäss den Figuren 1 bis 4
   - zweite Ausführungsform gemäss den Figuren 5 bis 8
   - dritte Ausführungsform gemäss Figur 9
   - vierte Ausführungsform gemäss Figur 13
   - fünfte Ausführungsform gemäss Figur 14
- Kammersystem 1 mit Doppelkammer (Innen- und Aussenraum)
   - erste Ausführungsform gemäss den Figuren 1 bis 4
   - zweite Ausführungsform gemäss den Figuren 5 und 6
   - dritte Ausführungsform gemäss Figur 9
- Probenbehälter 57 mit nur einem Raum (Innenraum)
   - erste Ausführungsform gemäss den Figuren 7 und 8
   - zweite Ausführungsform gemäss Figur 13
   - dritte Ausführungsform gemäss Figur 14
- Transfereinrichtung 11 mit Bodenelement 52
   - Rückhalteelement 54 (z.B. Filter) mit Bodenöffnung 53
   - durchstechbarer Bodenbereich 55 (z.B. Membrane) und Stechspitze 56, vgl. Fig. 5
   - Klappe oder weiteres Ventil als Bodenelement 52, Stift statt Stechspitze 56 als Transfereinrichtung 11 zum Öffnen der Klappe bzw. des Bodenventils

Es soll an dieser Stelle ausdrücklich darauf hingewiesen werden, dass diese drei Komponenten Einlassventil 12, Kammersystem 1 und Transfereinrichtung 11 frei kombiniert werden können, d.h. jede Ausführungsform einer dieser Komponenten ist mit jeder Ausführungsform der anderen beiden Komponenten kombinierbar. Ebenso soll an dieser Stelle ausdrücklich darauf hingewiesen werden, dass die unterschiedlichen Ausführungsformen dieser zwei Komponenten Einlassventil 12 und Probenbehälter 57 frei miteinander kombiniert werden können.

Eine allgemeine Vorbemerkung zu der Kennzeichnung in den Figuren: Wenngleich nicht in allen Figuren sichtbar oder im dazugehörigen Text nicht beschrieben, so betreffen doch die gleichen Bezugszeichen entsprechende, bzw. gleiche oder funktionsgleiche Elemente.

Die Figur 1 zeigt eine 3D-Darstellung eines Kammersystems gemäss einer ersten Ausführungsform der Erfindung bzw. des Einlassventils 12 in einem Doppelkammersystem und mit einem Rückhalteelement 54 in der Transfereinrichtung 11. In den Vertikalschnitten der Figuren 2A, 2B, 2C, 2D und 2E sind verschiedene Positionen bzw. Situationen dargestellt. Das Kammersystem 1 zum Behandeln von Proben umfasst einen Innenraum 2, der zumindest teilweise von einer Innenwand 3 umgeben und mit einem Deckel 4 verschliessbar ist. Der Deckel 4 umfasst eine zum Innenraum 2 führende Einlassöffnung 5, wobei diese Einlassöffnung 5 eine erste Pipetierachse 6 definiert, die das Zentrum der Einlassöffnung 5 durchstösst. Der Innenraum 2 ist zumindest teilweise von einem Aussenraum 7 umgeben, der zumindest teilweise von einer Aussenwand 8 umgeben ist, wobei die Aussenwand 8 eine zum Aussenraum 7 führende Pipetieröffnung 9 umfasst, die eine zweite Pipetierachse 10 definiert. Weiter umfasst das Kammersystem 1 eine Transfereinrichtung 11, die zum fluidischen Verbinden des Innenraums 2 mit dem Aussenraum 7 ausgebildet ist.

Erfindungsgemäss umfasst das Kammersystem 1 ein die Einlassöffnung 5 umfassendes Einlassventil 12 mit einem Federmechanismus 13 und ein Blockierelement 14, wobei der Federmechanismus 13 zum Ausüben einer Federkraft ausgebildet ist, mit welcher das Blockierelement 14 in einer Schliessposition 15 dichtend gegen ein Dichtelement 16 der Einlassöffnung 5 drückbar ist, und wobei das Blockierelement 14 entgegen der Federkraft des Federmechanismus 13 in eine Offenposition 17 bringbar ist, so dass eine Flüssigkeit 18 durch die Einlassöffnung 5 in den Innenraum 2 abgebbar ist.

Am Blockierelement 14 des Deckels 4 sind bevorzugt Führungsrippen 60 angeformt (vgl. Fig. 1), die eine konische Gestalt aufweisen und beim Verschliessen des Deckels als Einführungshilfe zum gleichmässigen und zentrierten Durchführen des Blockierelements 14 durch die vom Dichtelement 16 umgebene Einlassöffnung 5 dienen. In Figur 3 ist ein Detailausschnitt des Dichtelements 16 (entsprechend dem Kreisausschnitt in Fig. 2A) vergrössert und beispielhaft als Dichtlippe 16' dargestellt.

In einer bevorzugten Ausführungsform des Kammersystems 1 umfasst das Einlassventil 12 ein einstückig mit dem Blockierelement 14 hergestelltes und mit einem Werkzeug 19 beaufschlagbares Anpressteil 20, wobei das Anpressteil 20 über einen verengten Hals 21 in einem Abstand zum Blockierelement 14 angeordnet und mit dem Blockierelement 14 verbunden ist.

Die Erfindung bezieht sich auch auf eine Ausführungsform eines Probenbehälters mit nur einer Kammer, wie in den Figuren 7 und 8 dargestellt. Ein solcher Probenbehälter 57 umfasst ein Einlassventil 12 zum Beschicken eines Innenraums 2 des Probenbehälters 57 mit einer Flüssigkeit 18 und zum Wiederverschliessen des Innenraums 2, wobei der Innenraum 2 zumindest teilweise von einer Innenwand 3 umgeben und mit einem Deckel 4 verschliessbar ist, wobei das Einlassventil 12 eine Einlassöffnung 5 mit einem Dichtelement 16, einen Federmechanismus 13 und ein Blockierelement 14 umfasst, wobei diese Einlassöffnung 5 eine die Einlassöffnung 5 durchstossende erste Pipetierachse 6 definiert. Bevorzugt durchstösst die Pipetierachse 6 das Zentrum der Einlassöffnung 5. Der Federmechanismus 13 ist zum Ausüben einer Federkraft ausgebildet, mit welcher das Blockierelement 14 in einer Schliessposition 15 dichtend gegen das Dichtelement 16 der Einlassöffnung 5 drückbar ist, wobei das Blockierelement 14 entgegen der Federkraft des Federmechanismus 13 so in eine Offenposition 17 bringbar ist, dass eine Flüssigkeit 18 durch die Einlassöffnung 5 in den Innenraum 2 des Kammersystems 1 oder Probenbehälters 57 abgebbar ist. Das Einlassventil 12 umfasst ein einstückig mit dem Blockierelement 14 hergestelltes und mit einem Werkzeug 19 beaufschlagbares Anpressteil 20, wobei das Anpressteil 20 über einen verengten Hals 21 in einem Abstand zum Blockierelement 14 angeordnet und mit dem Blockierelement 14 verbunden ist.

Die Erfindung richtet sich auch auf ein Einlassventil 12 als solches in einer bevorzugten Ausführungsform zum Beschicken des Innenraums 2 eines Kammersystems 1 oder eines Probenbehälters 57 mit einer Flüssigkeit 18 und zum Wiederverschliessen des Innenraums 2, wobei das Einlassventil 12 vorzugsweise ein einstückig mit dem Blockierelement 14 hergestelltes und mit einem Werkzeug 19 beaufschlagbares Anpressteil 20 umfasst, und wobei das Anpressteil 20 über einen verengten Hals 21 in einem Abstand zum Blockierelement 14 angeordnet und mit dem Blockierelement 14 verbunden ist.

In einem Kammersystem 1, Probenbehälter 57 oder Einlassventil 12 , weist das Anpressteil 20 bevorzugt einen zentralen Flüssigkeitsdurchlass 22 auf, der in einem offenen Durchgangsbereich 23 des verengten Halses 21 zwischen dem Anpressteil 20 und dem Blockierelement 14 mündet. Der offene Durchgangsbereich 23 ist bevorzugt seitlich in Form von zwei gegenüberliegenden Öffnungen realisiert, wie zum Beispiel zu sehen in den Figuren 1, 2B, 2D, 5B, 7, 9B und 9C.

In bevorzugten Ausführungsformen des Kammersystems 1, Probenbehälters 57 oder Einlassventils 12 umfasst das Anpressteil 20 zudem Anschlagflächen 24 (vgl. Figuren 1, 2A, 2D, 2E, 5B und 7), die vom Federmechanismus 13 beaufschlagbar sind.

Beim Kammersystem 1, Probenbehälter 57 oder Einlassventil 12 ist überdies das Dichtelement 16 der Einlassöffnung 5 bevorzugt als durchgehende Dichtlippe 16' ausgebildet, wobei diese Dichtlippe 16' an einem Übergang 31 vorzugsweise zwischen einem einstückig mit der Innenwand 3 verbundenen Kragen 26 und der Innenwand 3 am inneren Umfang ununterbrochen angeordnet ist. Die Dichtlippe 16' gibt eine Öffnung frei, deren Querschnitt kleiner ist als der geometrisch ähnliche Querschnitt des Blockierelements 14. Die Querschnittsform kann z.B. polygonartig oder oval sein, ist aber vorzugsweise kreisrund. Das heisst besonders bevorzugt ist die Dichtlippe 16' kreisförmig ausgebildet und gibt eine kreisrunde Öffnung frei, deren Durchmesser kleiner ist als der Durchmesser des bevorzugterweise ebenfalls kreisrunden Blockierelements 14. Ein Dichtelement 16 bzw. eine Dichtlippe 16' findet sich bei den Ausführungsformen 1-3 und 5 des Einlassventils 12.

In einer vorteilhaften Ausführungsform von Kammersystem 1, Probenbehälter 57 oder Einlassventil 12, bei denen der Deckel 4 das Anpressteil 20, den verengten Hals 21 und das Blockierelement 14 umfasst, schnappt der Deckel 4 beim verschliessenden Einsetzen in das Kammersystem 1 in der Einlassöffnung 5 in der Dichtlippe 16' ein, entsprechend der Funktionsweise der ersten Ausführungsform des Einlassventils 12. Dies bedingt, dass das Material der Dichtlippe 16'eine gewisse Elastizität aufweisen muss, damit das im Querschnitt grössere Blockierelement 14 durch die im Querschnitt kleinere Einlassöffnung 5 in der Dichtlippe 16' hindurch gedrückt werden kann und die Dichtlippe anschliessend wieder relaxiert und die Dicht- sowie Haltefunktion gegen ein Öffnen des Deckels 4 erfüllt. In einer Variante bestehen die Innenwand und der Übergangsbereich der Kammer sowie die angeformte Dichtlippe aus demselben Material (falls dieses ausreichend flexibel ist). In einer alternativen Variante besteht das Dichtelement bzw. die Dichtlippe aus einem elastomeren Material bzw. Polymer, das z.B. durch Zweikomponentenspritzguss am steiferen Behältermaterial aufgebracht bzw. angespritzt werden kann.

Zur Herstellung der erfindungsgemässen Gegenstände werden also bevorzugt thermoplastische Kunststoffe verwendet. Bevorzugt sind z.B. Polyolefine wie insbesondere Polypropylen, und gegebenenfalls Polyolefinelastomere für die Dichtlippe; oder Polyamide, insbesondere transparente Polyamide, und gegebenenfalls Polyamidelastomere oder an Polyamid haftende Polyolefinelastomere für die Dichtlippe.

In einer bevorzugten Ausführungsform von Kammersystem 1, Probenbehälter 57 oder Einlassventil 12 ist der Deckel 4 mittels einer elastisch verformbaren Lasche 25 mit dem Kragen 26 verbunden, wobei der Kragen 26 den Federmechanismus 13 umschliesst und eine obere Öffnung 27 umfasst, in welcher der Deckel 4 einsetzbar ist. Dies ist z.B. abgebildet in den Figuren 1, 2A, 2C, 4, 6, 7 und 8. Zwecks erhöhter Biegeflexibilität kann die Lasche 25 ein oder mehrere Filmscharniere aufweisen.

In einer weiterführenden Ausführungsform eines solchen Kammersystems 1, Probenbehälters 57 oder Einlassventils 12 umfasst der Deckel 4 überdies eine am Anpressteil 20 angeformte Seitenwand 28, die an ihrem oberen Ende eine Schulter 29 aufweist, wobei diese Schulter 29 beim Einsetzen des Deckels 4 in die obere Öffnung 27 des Kragens 26 und beim Beaufschlagen des Kragens 26 eine maximale Offenposition 17 des Einlassventils 12 bei maximaler Deformation des Federmechanismus 13 definiert (vgl. Fig. 1 bis 4, 12 und 14).

Bevorzugt sind ein Kammersystem 1, Probenbehälter 57 oder Einlassventil 12 zudem dadurch gekennzeichnet, dass der Federmechanismus 13 eine Anzahl von schräg aufstehenden Federelementen 30 umfasst, wobei diese Federelemente 30 freistehend (mit Spalt zum Kragen 26) ausgebildet und an einem Übergang 31 (auf dem Absatz) zwischen dem Kragen 26 und der Innenwand 3 befestigt sind, wie z.B. in den Figuren 1, 2A, 2B und 2C ersichtlich. Diese Federelemente können wie in Fig. 2A dargestellt Federarme von ungefähr konstanter Dicke sein. Bevorzugt ist jedoch die Variante mit sich verjüngenden, zulaufenden Federarmen gegen das freie Ende hin, weil bei abnehmender Dicke die Federwirkung sanfter ist und sich über einen grösseren Bereich des Federarms verteilt, womit auch die Materialbelastung im Federarm punktuell weniger hoch ist.

Vorteilhaft für die Wirtschaftlichkeit ist es, wenn bei einem Kammersystem 1 oder einem Probenbehälter 57 die Innenwand 3, der Deckel 4 und das Einlassventil 12 des Kammersystems 1 oder des Probenbehälters 57 als ein einstückiges Element ausgebildet sind. Ein solches einstückiges Element ist vorzugsweise durch Spritzgiessen hergestellt.

In einer bevorzugten Ausführungsform eines Kammersystems 1 umfasst dieses einen Bodeneinsatz 32, wobei der Bodeneinsatz 32 eine Einsatzwand 33 und einen von der Horizontalen abweichenden Boden 34 umfasst, und wobei der Bodeneinsatz 32 in den Aussenraum 7 eingeschoben ist und mit der Einsatzwand 33 vorzugsweise dichtend an der den Aussenraum 7 umgebenden Aussenwand 8 anliegt. Eine solche Ausführungsform ist abgebildet in den Figuren 2A, 2B, 2C, 2D und 2E.

In einer bevorzugten Ausgestaltung eines Kammersystems 1 umfasst der Bodeneinsatz 32 eine Unterkante 35, wobei die Unterkante 35 des Bodeneinsatzes 32 zusammen mit einer Unterkante 36 der Aussenwand 8 eine Standfläche 37 des Kammersystems 1 definieren. Dies ist zu sehen in den Figuren 2A, 2B und 2D. Eine Standfläche 37 kann aber in anderen Varianten eines Zweikammersystems, wie dargestellt in den Figuren 5B bzw. 9B, auch durch die Aussenwand 8 allein gebildet werden.

Betreffend den Federmechanismus 13 sind in einer alternativen Variante ein Kammersystem 1, Probenbehälter 57 oder Einlassventil 12 dadurch charakterisiert, dass der Federmechanismus 13 Federringe 40 umfasst, wobei diese Federringe 40 freistehend ausgebildet und bevorzugt an einem Übergang 31 zwischen dem Kragen 26 und der Innenwand 3 befestigt sind. Solche Federringe 40 sind enthalten in der zweiten Ausführungsform des Einlassventils 12 in den Figuren 5A, 5B und 7.

Bei einem Kammersystem 1 mit Federringen 40 umfasst der mit der Innenwand 3 verbundene Kragen 26 bevorzugt eine Schulter 46, welche die zum Aussenraum 7 führende Pipetieröffnung 9 umfasst, wobei diese Schulter 46 zum einschnappenden Verbinden mit der Aussenwand 8 ausgebildet ist (vgl. z.B. Fig. 9B). Ein Kammersystem 1 gemäss dieser Ausführungsform umfasst in einer Variante ein Bodenteil 50, wobei das Bodenteil 50 die Aussenwand 8 und einen von der Horizontalen abweichenden Boden 34 umfasst, und wobei das Bodenteil 50 innen an der Aussenwand eine umlaufende Nut umfasst, in welche die Schulter 46 des mit der Innenwand 3 verbundenen Kragens 26 einschnappbar ist.

Es ist weiterhin bevorzugt, wenn in einem Kammersystem 1, Probenbehälter 57 oder Einlassventil 12 das Anpressteil 20 zudem den Federmechanismus 13 umfasst. Dies entspricht der dritten Ausführungsform des Einlassventils 12, bei welcher der Federmechanismus bevorzugt in Form von integrierten Federringen 40 realisiert ist, vgl. Fig. 9C. Bei einem derartigen Kammersystem 1, Probenbehälter 57 oder Einlassventil 12 ist es zudem bevorzugt, wenn der Federmechanismus 13 zumindest ein Abstosselement 39 umfasst, wobei dieses Abstosselement 39 bevorzugt am Deckel 4 gehalten ist. Eine besonders bevorzugte Variante eines derartigen Kammersystems 1, Probenbehälters 57 oder Einlassventils 12 ist dadurch gekennzeichnet, dass der Federmechanismus 13 Federringe 40 umfasst, wobei diese Federringe 40 das Blockierelement 14 mit dem zumindest einen Abstosselement 39 verbinden, und wobei diese Federringe 40 zusammen mit dem Anpressteil 20, dem Hals 21, dem Blockierelement 14 und dem zumindest einen Abstosselement 39 als einstückiges Ventilelement 41 hergestellt sind. Ein solches einstückig hergestelltes Ventilelement ist in Figur 9C dargestellt.

Bevorzugt ist bei einem Kammersystem 1, Probenbehälter 57 oder Einlassventil 12, wenn der Deckel 4 an einer Innenseite Schnappnocken 42 umfasst, und ein einstückiges Ventilelement 41 über diese Schnappnocken 42 von unten in den Deckel 4 einführbar ist und von diesen Schnappnocken 42 am Abstosselement 39 gehalten ist (vgl. Fig. 9A).

Betreffend die vorangegangene Ausführungsform ist eine bevorzugte Ausführungsform eines Kammersystems 1, Probenbehälters 57 oder Einlassventils 12 dadurch gekennzeichnet, dass der Deckel 4 ein Aussengewinde 43 und einen Anschlagring 44 umfasst, wobei die den Innenraum 2 umgebende Innenwand 3 ein zu diesem Aussengewinde 43 komplementäres Innengewinde 45 und eine Schulter 46 mit einer Öffnung 47 umfasst, und wobei der Deckel 4 mittels seines Aussengewindes 43 zumindest teilweise durch diese Öffnung 47 in das Innengewinde 45 eindrehbar ist bis sein Anschlagring 44 an der Schulter 46 ansteht. Dies ist beispielhaft dargestellt in den Figuren 9A und 9B.

Es ist bevorzugt, wenn bei einem Kammersystem 1 gemäss vorangegangener Beschreibung die Schulter 46 die zum Aussenraum 7 führende Pipetieröffnung 9 und eine Einsatzwand 33 umfasst, wobei die Innenwand 3, die Schulter 46 und die Einsatzwand 33 als einstückiger, vorzugsweise durch Spritzgiessen hergestellter Einsatz 48 ausgebildet ist (vgl. Fig. 9B). Ein daraus folgendes bevorzugtes Kammersystem 1 ist dadurch gekennzeichnet, dass es ein Aussenteil 49 mit einer Aussenwand 8, mit einem von der Horizontalen abweichenden Boden 34 und mit einer Standfläche 37 umfasst, wobei der Einsatz 48 in den Aussenraum 7 eingeschoben ist und mit der Einsatzwand 33 an der den Aussenraum 7 umgebenden Aussenwand 8 anliegt (vgl. Fig. 9A, 9B).

Bei einem Kammersystem 1 mit einem von der Horizontalen abweichenden Boden 34 ist es generell von Vorteil, wenn der von der Horizontalen abweichende Boden 34 eine tiefste Stelle 38 umfasst, die koaxial zur zweiten Pipetierachse 10 und in der geometrischen Projektion der zum Aussenraum 7 führenden Pipetieröffnung 9 angeordnet ist (vgl. Figuren 2B, 2D, 2E, 5B und 9B). So kann die Flüssigkeit aus dem Aussenraum 7 an der tiefsten Stelle heraus pipettiert werden.

In einer allgemeinen Ausgestaltung des Kammersystems 1 umfasst die Transfereinrichtung 11 ein mit der Innenwand 3 verbundenes Bodenelement 52, wobei das Bodenelement 52 in einem ruhenden Zustand des Kammersystems 1 für eine Flüssigkeit 18 undurchlässig ausgebildet ist. Ein solches Bodenelement ist in Fig. 2D gekennzeichnet. Als ruhender Zustand des Kammersystems 1 wird die Abwesenheit einer Beschleunigung, eines erhöhten statischen Drucks und einer mechanischen Kraft auf das Bodenelement verstanden.

Ein Kammersystem 1 mit einem Bodenelement 52 ist in einer bevorzugten Variante dadurch gekennzeichnet, dass das Bodenelement 52 zumindest eine Bodenöffnung 53 (vgl. z.B. Fig. 4) und ein diese zumindest eine Bodenöffnung 53 abdeckendes Rückhalteelement 54 (vgl. Fig. 2D) umfasst, wobei das Rückhalteelement 54 nur für eine Flüssigkeit 18 mit erhöhter Beschleunigung und/oder erhöhtem statischem Druck passierbar ist. Erhöhte Beschleunigung kann z.B. durch Zentrifugieren bewirkt werden. Ein erhöhter statischer Druck kann alternativ oder zusätzlich durch Beaufschlagung mit einem komprimierten Gas, z.B. mit Druckluft, erzeugt werden. Beim Rückhalteelement 54 kann es sich z.B. um einen feinporigen Filter handeln.

Ein Kammersystem 1 mit einer anderen Variante eines Bodenelements 52 ist dadurch gekennzeichnet, dass das Bodenelement 52 einen durchstechbaren Bodenbereich 55 umfasst, wobei das Blockierelement 14 eine Stechspitze 56 umfasst, die beim Erreichen einer maximalen Offenposition 17 des Einlassventils 12 den durchstechbaren Bodenbereich 55 (z.B. eine Membrane) durchstösst. Diese Variante der Transfereinrichtung ist dargestellt in den Figuren 5A und 5B.

Bei einem Kammersystem 1 können weitere Varianten eines Bodenelements 52 durch eine Klappe oder ein weiteres Ventil gebildet werden, mit einem Stift (zum Ausüben einer mechanischen Kraft) statt einer Stechspitze 56 als Transfereinrichtung 11 zum Öffnen der Klappe bzw. des Bodenventils. Alternativ kann diese Klappe durch erhöhte Beschleunigung und/oder erhöhten statischen Druck geöffnet werden.

Die Materialproben, bei denen es sich um allgemeine biologische oder auch forensische Proben handeln kann, werden manuell in den Innenraum 2 eingebracht, und anschliessend wird der Deckel 4 manuell verschlossen. Zur eindeutigen Kennzeichnung dient ein Identifikations-Element 51 unter dem Boden des Kammersystems (vgl. Fig. 2A, 2B, 2C, 2D und 2E). Geeignet für eine automatisierte Identifikation sind zum Beispiel RFID-Identifikations-Etiketten (RFID tags) oder ein Barcode (als 1D-Strichmuster oder 2D-Raster).

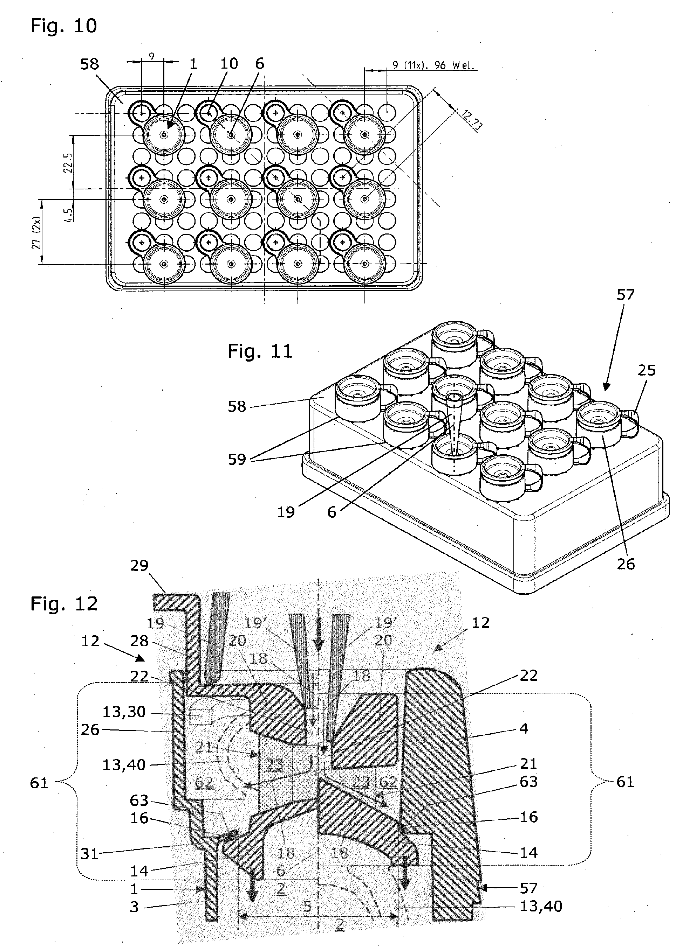

Zum automatisierten Handling der Proben bzw. der Behandlung und Analyse einer Vielzahl von Proben ist es zweckdienlich, die Kammersysteme 1 bzw. Probenbehälter 57 in einer Trägerplatte (Tray) mit passenden Öffnungen (Sitzen) zu platzieren. Figur 11 zeigt ein entsprechendes Mikroplatten-Tray 58 zum Aufnehmen von Kammersystemen 1 oder von Probenbehältern 57, wobei das Mikroplatten-Tray 58 eine gewisse Anzahl Sitze 59 umfasst, die in ihrer Grösse den Abmessungen der Aussenwände 8 der Kammersysteme 1 oder der Innenwände 3 der Probenbehälter 57 so angepasst sind, dass die Kammersysteme 1 oder Probenbehälter 57 in Formschluss satt in diese Sitze 59 und vorzugsweise mit Flächenberührung einsetzbar sind.

Bevorzugt sind in einem entsprechenden Mikroplatten-Tray 58 die Sitze 59 so in einem Array angeordnet, dass die ersten Pipettierachsen 6 der Kammersysteme 1 oder Probenbehälter 57 senkrecht zu einer Grundfläche des Mikroplatten-Trays 58 stehen und in einem orthogonalen Gitter angeordnet sind, dessen Gitterpunkte Mittelpunkten von Wells einer Mikroplatte nach ANSI-Standard entsprechen, z.B. einer 8x12 = 96 Well-Mikroplatte. Diese bevorzugte Anordnung der Sitze wird in Figur 10 illustriert durch ein hinterlegtes Mikroplatten-Standard-Raster unter den Kammersystemen. Dabei ist ersichtlich, dass die Kammersysteme bevorzugt so dimensioniert werden, dass auch die zweiten Pipettierachsen 10 auf Standardgitterkoordinaten zu liegen kommen. Auf diese Weise sind ein Handling der Trays und ein effizientes Pipetieren der Proben mit den verfügbaren Labor-Robotern mit Standard-Einstellungen möglich.

Im Falle von biologischen Proben werden diese oft lysiert, um an deren Zellinhalt zu gelangen. Als Lyse wird das Aufbrechen von Zellen (d.h. der Zellwände) bezeichnet, so dass Proteine und DNA (Nukleinsäuren) als Zielmoleküle zugänglich werden. Dieses Lysat wird nachher für unterschiedliche Folgeversuche und Analysen verwendet. Die Durchführung der Lyse erfolgt mit chemischen und/oder mechanischen Mitteln, und zwar vorzugsweise bei erhöhter Temperatur. Den Probebehältern muss hierzu also Wärme zugeführt werden, was beispielsweise durch Heizen mit heisser Luft, in einem Wasserbad oder Ölbad oder heissem Sand geschehen kann. Bei der vorliegenden Erfindung ist es zweckmässig, gerade die Trägerplatte bzw. das Mikroplatten-Tray 58 aus einem thermisch leitfähigen Material zu wählen, z.B. in Form eines Alu-Racks, also einem Halterungsblock aus Aluminium mit passenden Abstellöffnungen, der indirekt oder direkt (mit integrierter Heizung) beheizt werden kann und so die Wärme auf die satt passenden, eingesetzten Behälter überträgt.

Zur Illustration einer derartigen Anwendungsmöglichkeit der Erfindung folgt ein ausformuliertes Beispiel mit einem konkreten Verfahren, ohne dass dieses den Umfang der vorliegenden Erfindung einschränken soll. Die Erfindung betrifft somit auch ein Verfahren zum Inkubieren von Proben und zum Extrahieren von Zielmolekülen, wobei das Verfahren folgende Arbeitsschritte umfasst:
(a) Aufnehmen einer Zielmoleküle umfassenden Probe in einem Innenraum 2 eines Kammersystems 1, das den Innenraum 2 und einen diesen zumindest teilweise umgebenden Aussenraum 7 umfasst, wobei der Innenraum 2 zumindest teilweise von einer Innenwand 3 umgeben und mit einem Deckel 4 verschliessbar ist, und wobei der Aussenraum 7 zumindest teilweise von einer Aussenwand 8 umgeben ist, die eine zum Aussenraum 7 führende Pipetieröffnung 9 umfasst;
(b) Zugeben eines Lyse-Puffers zu der Probe im Innenraum 2;
(c) Verschliessen des Innenraums 2 mit dem Deckel 4;
(d) Inkubieren der mit dem Lyse-Puffer versetzten Probe unter erhöhter Temperatur, Lyse von Zielmoleküle enthaltenden Zellen und Aufnehmen der Zielmoleküle im Lyse-Puffer;
(e) Transferieren des Lyse-Puffers mit den Zielmolekülen in den Aussenraum 7 mit einer Transfereinrichtung 11, die zum fluidischen Verbinden des Innenraums 2 mit dem Aussenraum 7 ausgebildet ist; und
(f) Entnehmen der extrahierten Zielmoleküle aus dem Aussenraum 7.

Dieses erfindungsgemässe Verfahren zum Inkubieren von Proben und zum Extrahieren von Zielmolekülen ist dadurch gekennzeichnet, dass das Zugeben des Lyse-Puffers zu der Probe im Innenraum 2 mittels eines Einlassventils 12 des Kammersystems 1 und durch eine zum Innenraum 2 führende Einlassöffnung 5 des Deckels 4 und des Einlassventils 12 erfolgt, wobei das Einlassventil 12 ein Blockierelement 14 und einen Federmechanismus 13 umfasst, der zum Ausüben einer Federkraft ausgebildet ist, mit welcher der Federmechanismus 13 das Blockierelement 14 in einer Schliessposition 15 dichtend gegen die Einlassöffnung 5 drückt, und wobei zum Zugeben des Lyse-Puffers zu der Probe im Innenraum 2 das Blockierelement 14 entgegen der Federkraft des Federmechanismus 13 in eine Offenposition 17 gebracht wird.

Bevorzugt ist bei diesem Verfahren, dass das Zugeben des Lyse-Puffers über einen zentralen Flüssigkeitsdurchlass 22 des Einlassventils 12 erfolgt, der in einem offenen Durchgangsbereich 23 eines verengten Halses 21 zwischen einem Anpressteil 20 und dem Blockierelement 14 mündet.

Zudem wird bei diesem Verfahren beim Arbeitsschritt (d), d.h. beim Inkubieren der mit dem Lyse-Puffer versetzten Probe unter erhöhter Temperatur, der Lyse von Zielmolekülen enthaltenden Zellen und dem Aufnehmen der Zielmoleküle im Lyse-Puffer, bevorzugt mit einem Mikroplatten-Tray 58 in Form eines beheizten Alu-Racks gearbeitet, in welches das Kammersystem 1 satt passend eingesetzt ist.

Das vorgeschlagene Kammersystem mit Einlassventil bzw. der Probenbehälter mit Einlassventil sind sehr vielseitig für beliebige Behandlungen von irgendwelchen Proben, z.B. biologischen, biochemischen oder chemischen Proben, verwendbar. Die Erfindung betrifft deshalb auch die Verwendung eines Kammersystems 1 oder eines Probenbehälters 57 zum Behandeln von Proben, wobei das Behandeln insbesondere ausgewählt ist aus der Gruppe umfassend chemische Reaktionen, Synthese, Inkubieren, Lyse, Extraktion, Fest-Flüssig-Extraktion, Polymerase-Kettenreaktion (PCR), Aufbewahren und Transportieren.

Mit diesem neuartigen Kammersystem bzw. Probenbehälter zum Behandeln von Proben werden die Nachteile des Standes der Technik auf erfinderische Weise überwunden. Es wird ein System zur Verfügung gestellt, das sehr vorteilhaft für automatisierte Untersuchungen in robotisierten Laboranlagen ist. Insbesondere forensische Reihenuntersuchungen (Identifikation durch DNA-Screening) können damit hocheffizient durchgeführt werden.

Die Figur 12 zeigt einen schematischen Vertikalschnitt durch das sich selbsttätig wiederverschliessende Einlassventil 12 zum Beschicken des Innenraums 2 eines Probenbehälters 57 oder eines Kammersystems 1 mit einer Flüssigkeit 18, wobei auf der linken Seite die Situation in den Figuren 1 bis 8 und auf der rechten Seite die Situation in der Figur 9 verdeutlicht ist. Dieses Einlassventil 12 ist zum Zugeben der Flüssigkeit 18 (vgl. Pfeile) mittels einer Laborpipette 19' ausgebildet und umfasst eine erste Pipetierachse 6. Darüber hinaus umfasst das Einlassventil 12 eine Einlassöffnung 5 (vgl. Doppelpfeil) und es ist als diese Einlassöffnung 5 selbsttätig wiederverschliessend ausgebildet. Dieses Einlassventil 12 umfasst einen in der Einlassöffnung 5 angeordneten und in der Richtung der ersten Pipetierachse 6 zwischen einer Schliessposition 15 (hier gezeigt) und einer Offenposition 17 (hier nicht gezeigt) bewegbaren Ventilkörper 61.

Der Ventilkörper 61 ist bevorzugt einstückig hergestellt oder zumindest einstückig ausgebildet und umfasst:
- ein Blockierelement 14 mit zumindest einer Dichtfläche 63,
- ein Anpressteil 20, das zum Blockierelement 14 beabstandet und mit einem Werkzeug 19,19' beaufschlagbar ist, und das einen Flüssigkeitsdurchlass 22 im Bereich der ersten Pipetierachse 6 umfasst, und
- einen Hals 21, der das Blockierelement 14 und das Anpressteil 20 miteinander verbindet, und der mindestens einen offenen Durchgangsbereich 23 umfasst, welcher einerseits in den Flüssigkeitsdurchlass 22 des Anpressteils 20 mündend und andererseits als sich in einen Ventilraum 62 öffnend ausgebildet ist.

Der Hals 21 des Ventilkörpers 61 verbindet das Blockierelement 14 und das zu diesem beabstandete Anpressteil 20 starr miteinander, so dass Blockierelement 14 und Anpressteil 20 zueinander immer dieselbe Position einnehmen, ob das Anpressteil 20 von einem Werkzeug 19 oder einer Laborpipette 19' (also einer Pipettenspitze oder Dispenserspitze) beaufschlagt ist oder nicht. Als "Werkzeug" wird im Zusammenhang mit der vorliegenden Erfindung jede Vorrichtung bezeichnet, mit welcher simultan mit dem Annähern einer Pipettenspitze oder Dispenserspitze zum Flüssigkeitsdurchlass 22 das Anpressteil 20 beaufschlagt und so der Ventilkörper 61 des Einlassventils 12 in eine Offenposition 17 gebracht werden kann. Alternativ dazu kann das Anpressteil 20 bereits vor und/oder auch nach dem Annähern einer Pipettenspitze oder Dispenserspitze zum Flüssigkeitsdurchlass 22 mit einem solchen Werkzeug 19 beaufschlagt werden. Im weitesten Sinne werden als "Werkzeug 19" auch Pipettenspitzen oder Dispenserspitzen bezeichnet, weil auch mit diesen allein der Ventilkörper 61 des Einlassventils 12 in eine Offenposition 17 gebracht werden kann.

Als "Laborpipetten 19" werden im Zusammenhang mit der vorliegenden Erfindung alle Pipetten oder Dispenser bezeichnet, die in einem Labor verwendet werden können, seien dies beispielsweise Handpipetten oder robotisierte Pipetten einer Laborarbeitsstation zum Aufnehmen und Abgeben von Flüssigkeitsproben bzw. entsprechend ausgerüstete Dispenser zum Abgeben von Flüssigkeitsproben.

Das Blockierelement 14, das Anpressteil 20 und der Hals 21 des Ventilkörpers 61 sind als von der ersten Pipetierachse 6 durchstossen ausgebildet. Zudem umfasst das Einlassventil 12 einen den Ventilkörper 61 zumindest teilweise im Bereich des Halses 21 umgebenden Ventilraum 62, damit die durch den Flüssigkeitsdurchlass 22 und den offenen Durchgangsbereich eintretende Flüssigkeit 18 den Raum zwischen der Dichtfläche 63 und dem Dichtelement 16 erreichen und in den Innenraum 2 des Kammersystems oder des Probenbehälters 57 fliessen kann, falls sich der Ventilkörper 61 des Einlassventils 12 in der Offenstellung 17 befindet.

Dieses Einlassventil 12 umfasst ferner einen Federmechanismus 13;30;40, der einerseits am Anpressteil 20 (vgl. Fig. 1-8 sowie Fig. 13-14) oder am Blockierelement 14 (vgl. Fig. 9) angreifend und der andererseits an einer Wand 3 des Kammersystems 1 (vgl. Fig. 1-8) oder an einem Abschlusselement 4 (vgl. Fig. 9 sowie Fig. 13-14) des Probenbehälters 57 angreifend ausgebildet ist. Vorzugsweise ist das Abschlusselement 4 als reversibel verschliessbarer Deckel oder als Verschlussstück eines Kammersystems 1 oder eines Probenbehälters 57 ausgebildet und umfasst das Anpressteil 20, den Hals 21 und das Blockierelement 14. Das vorzugsweise als reversibel verschliessbarer Deckel ausgebildete Abschlusselement 4 schnappt bevorzugt beim verschliessenden Einsetzen in das Kammersystem 1 oder in den Probenbehälter 57 in der Einlassöffnung 5 einer Dichtlippe 16' ein und ist in einer bevorzugten Ausführungsform mittels einer elastisch verformbaren Lasche 25 mit einem Kragen 26 des Kammersystems 1 oder des Probenbehälters 57 verbunden.

Dieses Einlassventil 12 umfasst des Weiteren ein Dichtelement 16, das mit einer Innenwand 3 des Kammersystems 1 oder mit einem Abschlusselement 4 des Probenbehälters 57 verbunden ist.

Das erfindungsgemässe Einlassventil 12 ist insbesondere dadurch gekennzeichnet, dass der Federmechanismus 13;30;40 so ausgebildet ist, dass er die Dichtfläche 63 des Blockierelements 14 in der Schliessposition 15 des Ventilkörpers 61 gegen das Dichtelement 16 drückt, und wobei der Ventilkörper 61 des Einlassventils 12 so ausgebildet ist, dass er durch ein Beaufschlagen des Anpressteils 20 gegen den Widerstand des Federmechanismus 13;30;40 in die Offenposition 17 bringbar ist (vgl. fette Pfeile in Öffnungsrichtung). Bevorzugt ist ein solches Einlassventil 12, bei dem der Flüssigkeitsdurchlass 22 konzentrisch zur ersten Pipetierachse 6 angeordnet ist. Vorzugsweise ist der Federmechanismus 13 als eine Anzahl hochstehender Federelemente 30 oder als eine Anzahl Federringe 40 ausgebildet.

Wegen der einfacheren Herstellung speziell bevorzugt ist ein Ventilkörper 61, der rotationssymmetrisch ausgebildet ist und eine kreisförmige Dichtfläche 63 umfasst, wobei die Dichtfläche 63 bevorzugt auf einer Aussenseite 64 des Blockierelements 14 des Ventilkörpers 61 angeordnet ist und in der Schliessposition 15 des Einlassventils 12 einen ringförmigen Dichtschluss mit dem Dichtelement 16 bildet. Speziell bevorzugt ist ein Einlassventil 12, bei dem das Dichtelement 16 als ringförmig durchgehende Dichtlippe 16' oder als durchgehender ringförmiger Steg 16" ausgebildet ist und die Einlassöffnung 5 freigibt, deren Querschnitt kleiner ist als der geometrisch ähnliche Querschnitt des Blockierelements 14 (vgl. Fig. 12). Vorzugsweise ist das Blockierelement 14 schalenförmig ausgebildet und weist eine konvexe Aussenseite 64 auf, die dem Hals 21 zugewendet angeordnet ist und die mit zunehmender Distanz zur ersten Pipetierachse 6 weiter vom Anpressteil 20 beabstandet ist, wobei das schalenförmige Blockierelement 14 vorzugsweise eine konkave Innenseite 65 aufweist, die auf der vom Hals 21 abgewendeten Seite angeordnet ist.

Alternativ umfasst das als reversibel verschliessbarer Deckel ausgebildete Abschlusselement 4 zudem den Federmechanismus 13 und ist zum verschliessenden Einsetzen in das Kammersystem 1 oder in den Probenbehälter 57 einschraubbar ausgebildet, wobei das Anpressteil 20 vorzugsweise zudem den Federmechanismus 13 umfasst.

In allen Figuren 1-14 ist der Hals 21 konzentrisch zur ersten Pipetierachse 6 angeordnet und weist einen gegenüber dem Blockierelement 14 und dem Anpressteil 20 reduzierten Querschnitt auf. Zudem ist der Hals immer als massive Säule mit einem ausgesparten Flüssigkeitsdurchlass 22 und zwei offenen Durchgangsbereichen 23 dargestellt. Abweichend von dieser Darstellung kann der Hals 21 auch als hohles Rohr ausgebildet sein, dessen Hohlraum den Flüssigkeitsdurchlass 22 bildet (nicht gezeigt); dieses Rohr kann seitliche Durchbrüche aufweisen, die als offene Durchgangsbereiche 23 ausgebildet sind (nicht dargestellt). Allgemein genügt ein einziger offener Durchgangsbereich 23, der vorzugsweise im Wesentlichen rechtwinklig zur ersten Pipetierachse 6 abgehend ausgebildet ist; es ist jedoch vorteilhaft, den Ventilkörper 61 spiegelsymmetrisch oder rotationssymmetrisch auszubilden, so dass zwei oder mehr offene Durchgangsbereiche 23 ausgebildet werden.

Die Figur 13 zeigt einen Vertikalschnitt durch eine zweite Ausführungsform eines erfindungsgemässen Probenbehälters 57 mit einem über eine elastische Lasche 25 verbundenen Deckel 4, in dem ein separat hergestellter Ventilkörper 61 zur Vervollständigung des erfindungsgemässen, sich selbsttätig wiederverschliessende Einlassventils 12 anordenbar ist.

Die Fig. 13A zeigt den geöffneten Probenbehälter 57 mit Innenraum 2 und Deckel 4, sowie einen in den Deckel 4 einzusetzenden Ventilkörper 61, der hier in der Ansicht gleich orientiert wie im geschlossenen Zustand des Probenbehälters 57 dargestellt ist (vgl. Schnitt des Ventilkörper 61 in Fig. 13B). Dieser Ventilkörper 61 kann (vorzugsweise mittels Spritzgusstechniken) einstückig hergestellt werden. Alternativ kann der Ventilkörper 61 einstückig ausgebildet werden, indem beispielsweise zwei (vorzugsweise mittels Spritzgusstechniken hergestellte) Teile dieses Ventilkörpers 61 mittels Reibschweissen oder anderer geeigneter Methoden fest miteinander verbunden werden.

Zum Einsetzen des Ventilkörper 61 in das Abschlusselement 4 bzw. in den Deckel, muss der Ventilkörper 61 noch um 180° gedreht werden, so dass er zuerst mit dem Anpressteil 20 von oben in den Deckel 4 eintaucht bis die Anschlagflächen 24 des Anpressteils 20 nach dem Auseinanderdrängen der Federelemente 30 auf die Enden der Federelemente 30 zu liegen kommen. Damit der Ventilkörper 61 diese Stellung erreichen kann, muss er gegen den Widerstand des sich leicht deformierenden und am Dichtelement 16 anstehenden Blockierelements 14 in Richtung der ersten Pipetierachse 6 etwas über die Schliessposition 15 hinaus bewegt werden. In der Schliessposition 15 wird der Ventilkörper 61 durch die leicht deformierten Federelemente 30 mit seiner Dichtfläche 63 dichtend gegen das Dichtelement 16 gedrückt.

Das Dichtelement 16 ist hier als durchgehender ringförmiger Steg 16" ausgebildet und gibt die Einlassöffnung 5 frei, deren Querschnitt kleiner ist als der geometrisch ähnliche Querschnitt des Blockierelements 14. Vorzugsweise erstreckt sich der ringförmige Steg 16" im Wesentlichen parallel zur ersten Pipetierachse 6; speziell bevorzugt ist dabei, dass sich der Innendurchmesser des ringförmigen Stegs 16" in der Figur 13A nach oben gerade soviel ausweitet, wie es ein problemloses Entformen nach dem Spritzgiessen der Probenbehälter/Deckel-Kombination erforderlich macht.

Die Figur 13B zeigt den geschlossenen Probenbehälter 57 mit dem Ventilkörper 61 in der Schliessposition 15; der Probenbehälter 57 von Fig. 13A wurde nach dem einsetzen des Ventilkörpers 61 durch Einstecken des über eine flexible, verformbare Lasche 25 mit dem Probenbehälter 57 verbundenen Abschlusselements bzw. Deckels 4 verschlossen. In diesem Zustand besteht ein Reibschluss zwischen einer ringförmigen Einsteckwand 66 des Deckels 4 und der Innenwand 3 des Probenbehälters 57. Auf der Seite, die der flexibeln, verformbaren Lasche 25 gegenüber liegt, weist der Deckel 4 vorzugsweise eine Nase 67 auf, welche das Öffnen des Deckels 4 vereinfacht. Der Kragen 26 und die ringförmige Einsteckwand 66 des Deckels 4 sind vorzugsweise über eine Schulter 68 miteinender verbunden. Diese Schulter 68 bildet beim Einstecken des Deckels 4 in den Probenbehälter 57 einen Anschlag für den oberen Rand der die Innenwand 3 des Probenbehälters 57, so dass der Deckel 4 in seinem geschlossenen Zustand und damit auch das Einlassventil 12 immer präzise dieselbe Position einnimmt. Zum automatisierten bzw. robotisierten Zugeben von Flüssigkeiten 18 in den Innenraum 2 des Probenbehälters 57 ist es von grossem Vorteil, wenn sich der Deckel 4 des Probenbehälters 57 und damit auch der Ventilkörper 61 immer an exakt derselben Stelle befindet. Ein Mikroplatten-Tray 58 zum Aufnehmen von derartigen Probenbehältern 57 (vgl. Fig. 11) wurde weiter oben bereits beschrieben und erleichtert das exakte Ausrichten und sichere Halten der Probenbehälter 57 wesentlich. Gut sichtbar ist der Ventilraum 62, der den Ventilkörper 61 zumindest teilweise im Bereich des Halses 21 umgibt.

Die Figur 13C zeigt den geschlossenen Probenbehälter 57 mit dem Ventilkörper 61 in der Offenposition 17. Der Ventilkörper 61 nimmt nach einer Bewegung in Richtung der ersten Pipetierachse 6 diese Offenposition 17 ein, weil er gegen den Widerstand der elastischen Federelemente 30 nach unten bewegt wurde. Diese Bewegung ermöglicht, die Dichtfläche 63 auf der konvexen Aussenseite 64 des Blockierelements 14 so weit von dem als durchgehender ringförmiger Steg 16" ausgebildeten Dichtelement 16 wegzubewegen, dass die Einlassöffnung 5 zum Durchfliessen der Flüssigkeit 18 zumindest teilweise frei gegeben ist.

In dieser Figur 13C ist (in Abweichung zur Darstellung in der Fig. 12) eine Pipetten- oder Dispenserspitze 19' mit einer im Wesentlichen endständigen, kolbenförmigen Verstärkung 69 gezeigt. Mit einer derartigen Verstärkung 69 kann ein grösserer Widerstand der elastischen Federelemente 30 des erfindungsgemässen Einlassventils 12 überwunden werden, ohne dass die Pipetten- oder Dispenserspitze 19' deformiert wird. Diese kolbenförmige Verstärkung 69 kann mehr (vgl. linke Seite der Pipetten- oder Dispenserspitze 19') oder weniger ausgeprägt (vgl. rechte Seite der Pipetten- oder Dispenserspitze 19') sein und zusätzliche Verstärkungsrippen 70 umfassen.

Die Figur 14 zeigt einen Vertikalschnitt durch eine dritte Ausführungsform eines erfindungsgemässen Probenbehälters 57 mit einem über eine elastische Lasche 25 verbundenen Deckel 4, dem über eine weitere elastische Lasche 25 ein mit dem Deckel 4 und dem Probenbehälter 57 einstückig hergestellter Ventilkörper 61 anhängt.

Die Figur 14A zeigt den geöffneten Probenbehälter 57 mit Innenraum 2, Deckel 4 und Ventilkörper 61, so wie er vorzugsweise mittels Spritzgusstechniken in einem Arbeitsvorgang und einstückig hergestellt werden kann. Ein Vorteil dieser dritten Ausführungsform gegenüber der in der Fig. 13 gezeigten zweiten Ausführungsform liegt in der Einstückigkeit: Es sind immer alle benötigten Teile zum Erstellen des Probenbehälters 57 mit einem funktionsfähigen, selbstschliessenden Einlassventil 12 zum Beschicken des Innenraums 2 dieses Probenbehälters 57 mit einer Flüssigkeit 18 vorhanden und können auch nicht verloren werden. Speziell bevorzugt ist deshalb ein Einlassventil 12, bei dem das als reversibel verschliessbarer Deckel ausgebildete Abschlusselement 4 einen Kragen 26 umfasst, der mittels einer elastisch verformbaren Lasche 25 mit dem Kammersystem 1 oder mit dem Probenbehälter 57 verbunden ist, wobei vorzugsweise der das Blockierelement 14, das Anpressteil 20 und den Hals 21 umfassende Ventilkörper 61 mittels einer elastisch verformbaren Lasche 25 mit dem Kragen 26 des Abschlusselements 4 verbunden ist.

Die Figur 14B zeigt den geöffneten Probenbehälter 57 mit Innenraum 2 und dem in den Deckel 4 eingesetzten Ventilkörper 61. Der Ventilkörper 61 wird unter Verbiegen der Lasche 25 um 180° geschwenkt und von unten in die obere Öffnung 27 des Kragens 26 des Deckels 4 eingeführt. Dann wird der Ventilkörper 61 in Richtung der ersten Pipetierachse 6 weiterbewegt, bis sein Blockierelement 14 die Einlassöffnung 5 durchstösst, das als ringförmig durchgehende Dichtlippe 16' ausgebildete Dichtelement 16 mit der Dichtfläche 63 auf der konvexen Aussenseite 64 des Blockierelements 14 beaufschlägt und gleichzeitig die von der Schulter 68 des Deckels 4 aufstehenden Federelemente 30 leicht deformiert. Somit bewirken die Federelemente 30 eine Kraft, welche den Ventilkörper 61 in Richtung der ersten Pipetierachse 6 gegen den Widerstand der vorzugsweise ebenfalls elastischen Dichtlippe 16' in einer Schliessposition 15 hält.

Die Figur 14C zeigt den geschlossenen Probenbehälter 57 mit dem Ventilkörper 61 in der Schliessposition 15. Der Probenbehälter 57 von Fig. 14B wurde durch Einstecken des über eine flexible, verformbare Lasche 25 mit dem Probenbehälter 57 verbundenen Abschlusselements bzw. Deckels 4 verschlossen. In diesem Zustand besteht ein Reibschluss zwischen einer ringförmigen Einsteckwand 66 des Deckels 4 und der Innenwand 3 des Probenbehälters 57. Auf der Seite, die der flexibeln, verformbaren Lasche 25 gegenüber liegt, weist der Deckel 4 vorzugsweise eine Nase 67 auf, welche das Öffnen des Deckels 4 vereinfacht. Der Kragen 26 und die ringförmige Einsteckwand 66 des Deckels 4 sind vorzugsweise über eine Schulter 68 miteinender verbunden. Diese Schulter 68 bildet beim Einstecken des Deckels 4 in den Probenbehälter 57 einen Anschlag für den oberen Rand der die Innenwand 3 des Probenbehälters 57, so dass der Deckel 4 und damit auch das Einlassventil 12 in seinem geschlossenen Zustand immer präzise dieselbe Position einnimmt. Zum automatisierten bzw. robotisierten Zugeben von Flüssigkeiten 8 in den Innenraum 2 des Probenbehälters 57 ist es von grossem Vorteil, wenn sich der Deckel 4 des Probenbehälters 57 und damit auch der Ventilkörper 61 immer an exakt derselben Stelle befindet. Ein Mikroplatten-Tray 58 zum Aufnehmen von derartigen Probenbehältern 57 (vgl. Fig. 11) wurde weiter oben bereits beschrieben und erleichtert das exakte Ausrichten und sichere Halten der Probenbehälter 57 wesentlich. Gut sichtbar ist der Ventilraum 62, der den Ventilkörper 61 zumindest teilweise im Bereich des Halses 21 umgibt.

Die Figur 14D zeigt den geschlossenen Probenbehälter 57 mit dem Ventilkörper 61 in der Offenposition 17. Der Ventilkörper 61 nimmt nach einer Bewegung in Richtung der ersten Pipetierachse 6 diese Offenposition 17 ein, weil er gegen den Widerstand der elastischen Federelemente 30 nach unten bewegt wurde. Diese Bewegung ermöglicht, die Dichtfläche 63 auf der konvexen Aussenseite 64 des Blockierelements 14 so weit von dem als ringförmig durchgehende Dichtlippe 16' ausgebildeten Dichtelement 16 wegzubewegen, dass die Einlassöffnung 5 zum Durchfliessen der Flüssigkeit 18 zumindest teilweise frei gegeben ist. Bei dieser dritten Ausführungsform des erfindungsgemässen Probenbehälters 57 bzw. bei dieser fünften Ausführungsform der erfindungsgemässen Einlassventils 12 umfasst der Ventilkörper 61 eine am Anpressteil 20 angeformte Seitenwand 28, die an ihrem oberen Ende eine Schulter 29 aufweist. Diese Schulter 29 definiert beim nach unten Drücken des Anpressteils 20 mit einem Werkzeug 19 oder mit einer Laborpipette 19' eine maximale Offenposition 17 des Einlassventils 12 bei maximaler Deformation des Federmechanismus 13 bzw. der Federelemente 30.

**Bezugszeichenliste**

| | | | |
|---|---|---|---|
| 1 | Kammersystem | 5 | Einlassöffnung |
| 2 | Innenraum | 6 | erste Pipetierachse |
| 3 | Innenwand | 7 | Aussenraum |
| 4 | Abschlusselement, Deckel | 8 | Aussenwand |
| 9 | Pipetieröffnung | 38 | tiefste Stelle von 34 |
| 10 | zweite Pipetierachse | 39 | Abstosselement |
| 11 | Transfereinrichtung | 40 | Federringe |
| 12 | Einlassventil | 41 | einstückiges Ventilelement |
| 13 | Federmechanismus | 42 | Schnappnocken |
| 14 | Blockierelement | 43 | Aussengewinde von 4 |
| 15 | Schliessposition | 44 | Anschlagring von 4 |
| 16 | Dichtelement | 45 | Innengewinde von 3 |
| 16' | Dichtlippe | 46 | Schulter von 3 |
| 16" | ringförmiger Steg | 47 | Öffnung von 46 |
| 17 | Offenposition | 48 | Einsatz |
| 18 | Flüssigkeit | 49 | Aussenteil |
| 19 | Werkzeug | 50 | Bodenteil |
| 19' | Laborpipette, Pipettenspitze, Dispenserspitze | 51 | Identifikations-Element |
| | | 52 | Bodenelement |
| 20 | Anpressteil | 53 | Bodenöffnung |
| 21 | Hals | 54 | Rückhalteelement |
| 22 | Flüssigkeitsdurchlass | 55 | durchstechbarer Bodenbereich |
| 23 | offener Durchgangsbereich | 56 | Stechspitze |
| 24 | Anschlagflächen | 57 | Probenbehälter |
| 25 | verformbare Lasche | 58 | Mikroplatten-Tray |
| 26 | Kragen | 59 | Sitze |
| 27 | obere Öffnung von 26 | 60 | Führungsrippe |
| 28 | Seitenwand von 20 | 61 | Ventilkörper |
| 29 | Schulter von 28 | 62 | Ventilraum |
| 30 | Federelement | 63 | Dichtfläche |
| 31 | Übergang | 64 | konvexe Aussenseite von 14 |
| 32 | Bodeneinsatz | 65 | konkave Innenseite von 14 |
| 33 | Einsatzwand von 32 | 66 | ringförmige Einsteckwand |
| 34 | Boden | 67 | Nase |
| 35 | Unterkante von 32 | 68 | Schulter von 66 |
| 36 | Unterkante von 8 | 69 | kolbenförmige Verstärkung |
| 37 | Standfläche von 1 | 70 | Verstärkungsrippe |

## Patentansprüche

1. Einlassventil (12) zum Beschicken eines Innenraums (2) eines Kammersystems (1) oder Probenbehälters (57) mit einer Flüssigkeit (18), wobei das Einlassventil (12) zum Zugeben der Flüssigkeit (18) mittels einer Laborpipette (19') ausgebildet ist und eine erste Pipetierachse (6) umfasst, und wobei das Einlassventil (12) eine Einlassöffnung (5) umfasst und als diese Einlassöffnung (5) selbsttätig wiederverschliessend ausgebildet ist, **dadurch gekennzeichnet, dass** das Einlassventil (12) umfasst:
(a) einen in der Einlassöffnung (5) anordenbaren und in der Richtung der ersten Pipetierachse (6) zwischen einer Schliessposition (15) und einer Offenposition (17) bewegbaren Ventilkörper (61), umfassend:
- ein Blockierelement (14), das eine Dichtfläche (63) umfasst,
- ein Aripressteil (20), das zum Blockierelement (14) beabstandet und mit einem Werkzeug (19,19') beaufschlagbar ist, und das einen Flüssigkeitsdurchlass (22) im Bereich der ersten Pipetierachse (6) umfasst,
- einen Hals (21), der das Blockierelement (14) und das Anpressteil (20) miteinander verbindet, und der mindestens einen offenen Durchgangsbereich (23) umfasst, welcher einerseits in den Flüssigkeitsdurchlass (22) des Anpressteils (20) mündend und andererseits als sich in einen Ventilraum (62) öffnend ausgebildet ist;
(b) einen den Ventilkörper (61) zumindest teilweise im Bereich des Halses (21) umgebenden Ventilraum (62);
(c) einen Federmechanismus (13;30;40), der einerseits am Anpressteil (20) oder am Blockierelement (14) angreifend und der andererseits an einer Wand (3) des Kammersystems (1) oder an einem Abschlusselement (4) des Probenbehälters (57) angreifend ausgebildet ist; und
(d) ein Dichtelement (16), das mit einer Innenwand (3) des Kammersystems (1) oder mit einem Abschlusselement (4) des Probenbehälters (57) verbunden ist,
wobei der Federmechanismus (13;30;40) so ausgebildet ist, dass er die Dichtfläche (63) des Blockierelements (14) in der Schliessposition (15) des Ventilkörpers (61) gegen das Dichtelement (16) drückt, und wobei der Ventilkörper (61) des Einlassventils (12) so ausgebildet ist, dass er durch ein Beaufschlagen des Anpressteils (20) gegen den Widerstand des Federmechanismus (13;30;40) in die Offenposition (17) bringbar ist.

2. Einlassventil (12) nach Anspruch 1, **dadurch gekennzeichnet, dass** der Ventilkörper (61) einstückig hergestellt oder zumindest einstückig ausgebildet ist, wobei der Hals (21) des Ventilkörpers (61) das Blockierelement (14) und das zu diesem beabstandete Anpressteil (20) starr miteinander verbindet, und wobei Blockierelement (14), Anpressteil (20) und Hals (21) des Ventilkörpers (61) als von der ersten Pipetierachse (6) durchstossen ausgebildet sind.

3. Einlassventil (12) nach einem der Ansprüche 1 oder 2, **dadurch gekennzeichnet, dass** der Flüssigkeitsdurchlass (22) konzentrisch zur ersten Pipetierachse (6) angeordnet ist.

4. Einlassventil (12) nach einem der vorhergehenden Ansprüche, **dadurch gekennzeichnet, dass** der Ventilkörper (61) rotationssymmetrisch ausgebildet ist und eine kreisförmige Dichtfläche (63) umfasst.

5. Einlassventil (12) nach Anspruch 4, **dadurch gekennzeichnet, dass** die Dichtfläche (63) auf einer Aussenseite (64) des Blockierelements (14) des Ventilkörpers (61) angeordnet ist und in der Schliessposition (15) des Einlassventils (12) einen ringförmigen Dichtschluss mit dem Dichtelement (16) bildet.

6. Einlassventil (12) nach einem der vorhergehenden Ansprüche, **dadurch gekennzeichnet, dass** das Dichtelement (16) als ringförmig durchgehende Dichtlippe (16') oder als durchgehender ringförmiger Steg (16") ausgebildet ist und die Einlassöffnung (5) freigibt, deren Querschnitt kleiner ist als der geometrisch ähnliche Querschnitt des Blockierelements (14).

7. Einlassventil (12) nach einem der vorhergehenden Ansprüche, **dadurch gekennzeichnet, dass** das Blockierelement (14) schalenförmig ausgebildet ist und eine konvexe Aussenseite (64) aufweist, die dem Hals (21) zugewendet angeordnet ist und die mit zunehmender Distanz zur ersten Pipetierachse (6) weiter vom Anpressteil (20) beabstandet ist, **und dass** das schalenförmige Blockierelement (14) eine konkave Innenseite (65) aufweist, die auf der vom Hals (21) abgewendeten Seite angeordnet ist.

8. Einlassventil (12) nach einem der vorhergehenden Ansprüche, **dadurch gekennzeichnet, dass** der Hals (21) konzentrisch zur ersten Pipetierachse (6) angeordnet ist und einen gegenüber dem Blockierelement (14) und dem Anpressteil (20) reduzierten Querschnitt aufweist.

9. Einlassventil (12) nach einem der vorhergehenden Ansprüche, **dadurch gekennzeichnet, dass** der mindestens eine offene Durchgangsbereich (23) im Wesentlichen rechtwinklig zur ersten Pipetierachse (6) abgehend ausgebildet ist.

10. Einlassventil (12) nach einem der vorhergehenden Ansprüche, **dadurch gekennzeichnet, dass** das Abschlusselement (4) als verschliessbarer oder reversibel verschliessbarer Deckel oder als Verschlussstück eines Kammersystems (1) oder eines Probenbehälters (57) ausgebildet ist und das Anpressteil (20), den Hals (21) und das Blockierelement (14) umfasst.

11. Einlassventil (12) nach Anspruch 10, **dadurch gekennzeichnet, dass** das als verschliessbarer Deckel ausgebildete Abschlusselement (4) beim verschliessenden Einsetzen in das Kammersystem (1) oder in den Probenbehälter (57) in der Einlassöffnung (5) einer Dichtlippe (16') einschnappt.

12. Einlassventil (12) nach Anspruch 10 oder 11, **dadurch gekennzeichnet, dass** das als verschliessbarer Deckel ausgebildete Abschlusselement (4) mittels einer elastisch verformbaren Lasche (25) mit einem Kragen (26) des Kammersystems (1) oder des Probenbehälters (57) verbunden ist.

13. Einlassventil (12) nach Anspruch 10, **dadurch gekennzeichnet, dass** das als reversibel verschliessbarer Deckel ausgebildete Abschlusselement (4) zudem den Federmechanismus (13) umfasst und zum verschliessenden Einsetzen in das Kammersystem (1) oder in den Probenbehälter (57) einschraubbar ausgebildet ist.

14. Einlassventil (12) nach Anspruch 13, **dadurch gekennzeichnet, dass** das Anpressteil (20) zudem den Federmechanismus (13) umfasst.

15. Einlassventil (12) nach Anspruch 10, **dadurch gekennzeichnet, dass** das als reversibel verschliessbarer Deckel ausgebildete Abschlusselement (4) einen Kragen (26) umfasst, der mittels einer elastisch verformbaren Lasche (25) mit dem Kammersystem (1) oder mit dem Probenbehälter (57) verbunden ist.

16. Einlassventil (12) nach Anspruch 15, **dadurch gekennzeichnet, dass** der das Blockierelement (14), das Anpressteil (20) und den Hals (21) umfassende Ventilkörper (61) mittels einer elastisch verformbaren Lasche (25) mit dem Kragen (26) des Abschlusselements (4) verbunden ist.

17. Einlassventil (12) nach einem der vorhergehenden Ansprüche, **dadurch gekennzeichnet, dass** das Anpressteil (20) Anschlagflächen (24) umfasst, die durch den Federmechanismus (13;30;40) beaufschlagbar ausgebildet sind.

18. Einlassventil (12) nach einem der vorhergehenden Ansprüche, **dadurch gekennzeichnet, dass** der Federmechanismus (13) als eine Anzahl hochstehender Federelemente (30) oder als eine Anzahl Federringe (40) ausgebildet ist.

19. Kammersystem (1) zum Behandeln von Proben, umfassend:
(a) einen Innenraum (2), der zumindest teilweise von einer Innenwand (3) umgeben und mit einem Abschlusselement (4) verschliessbar ist;
(b) ein Abschlusselement (4), das eine zum Innenraum (2) führende Einlassöffnung (5) umfasst, wobei diese Einlassöffnung (5) eine erste Pipetierachse (6) definiert, welche die Einlassöffnung (5) durchstösst;
(c) einen den Innenraum (2) zumindest teilweise umgebenden Aussenraum (7), der zumindest teilweise von einer Aussenwand (8) umgeben ist, wobei die Aussenwand (8) eine zum Aussenraum (7) führende Pipetieröffnung (9) umfasst, die eine zweite Pipetierachse (10) definiert; und
(d) eine Transfereinrichtung (11), die zum fluidischen Verbinden des Innenraums (2) mit dem Aussenraum (7) ausgebildet ist,
**dadurch gekennzeichnet, dass** das Kammersystem (1) ein die Einlassöffnung (5) umfassendes Einlassventil (12) gemäss einem der vorhergehenden Ansprüche umfasst.

20. Probenbehälter (57) zum Aufbewahren oder Behandeln von Proben, umfassend:
(a) einen Innenraum (2), der zumindest teilweise von einer Innenwand (3) umgeben und mit einem Abschlusselement (4) verschliessbar ist,
(b) ein Abschlusselement (4), das eine zum Innenraum (2) führende Einlassöffnung (5) umfasst, wobei diese Einlassöffnung (5) eine erste Pipetierachse (6) definiert, welche die Einlassöffnung (5) durchstösst;
**dadurch gekennzeichnet, dass** der Probenbehälter (57) ein die Einlassöffnung (5) umfassendes Einlassventil (12) gemäss einem der Ansprüche 1 bis 18 umfasst.

21. Verwendung eines Kammersystems (1) gemäss Anspruch 19 oder eines Probenbehälters (57) gemäss Anspruch 20 zum Behandeln von Proben, wobei das Behandeln ausgewählt ist aus der Gruppe umfassend chemische Reaktionen, Synthese, Inkubieren, Lyse, Extraktion, Fest-Flüssig-Extraktion, Polymerase-Kettenreaktion (PCR), Aufbewahren und Transportieren.

## Claims

1. Inlet valve (12) for feeding a liquid (18) to an interior space (2) of a chamber system (1) or a sample container (57), wherein the inlet valve (12) is formed for supplying the liquid (18) by means of a laboratory pipette (19') and comprises a first pipetting axis (6), and wherein the inlet valve (12) comprises an inlet opening (5) and is formed to automatically reclose said inlet opening (5), **characterized in that** the inlet valve (12) comprises:
(a) a valve body (61) which can be arranged in the inlet opening (5) and is movable in the direction of the first pipetting axis (6) between a closed position (15) and an open position (17), comprising:
- a blocking element (14) which comprises a sealing surface (63),
- a pressing part (20) which is spaced from the blocking element (14) and can be pressed by a tool (19,19'), and which comprises a liquid passage (22) in the region of the first pipetting axis (6),
- a throat (21) which connects the blocking element (14) and the pressing part (20) to each other, and which comprises at least one open passage region (23) which opens on the one hand into the liquid passage (22) of the pressing part (20) and is formed on the other hand to open into a valve chamber (62);
(b) a valve chamber (62) which surrounds the valve body (61) at least partly in the region of the throat (21);
(c) a spring mechanism (13;30;40) which acts on the one hand on the pressing part (20) or on the blocking element (14) and which is formed on the other hand to act on a wall (3) of the chamber system (1) or on an end element (4) of the sample container (57); and
(d) a sealing element (16) which is connected to an inner wall (3) of the chamber system (1) or to an end element (4) of the sample container (57),
wherein the spring mechanism (13;30;40) is formed in such a way that it presses the sealing surface (63) of the blocking element (14) in the closed position (15) of the valve body (61) against the sealing element (16), and wherein the valve body (61) of the inlet valve (12) is formed in such a way that it can be brought to the open position (17) by pressing the pressing part (20) against the resistance of the spring mechanism (13;30;40).

2. Inlet valve (12) according to claim 1, **characterized in that** the valve body (61) is integrally produced or is at least formed integrally, wherein the throat (21) of the valve body (61) rigidly connects the blocking element (14) and the pressing part (20), which is spaced therefrom, to each other, and wherein the blocking element (14), the pressing part (20) and the throat (21) of the valve body (61) are formed to be penetrated by the first pipetting axis (6).

3. Inlet valve (12) according to one of the claims 1 or 2, **characterized in that** the liquid passage (22) is arranged concentrically in relation to the first pipetting axis (6).

4. Inlet valve (12) according to one of the preceding claims, **characterized in that** the valve body (61) is formed in a rotationally symmetric manner and comprises a circular sealing surface (63).

5. Inlet valve (12) according to claim 4, **characterized in that** the sealing surface (63) is arranged on an exterior (64) of the blocking element (14) of the valve body (61), and forms an annular tight closing with the sealing element (16) in the closed position (15) of the inlet valve (12).

6. Inlet valve (12) according to one of the preceding claims, **characterized in that** the sealing element (16) is formed as an annular continuous sealing lip (16') or as a continuous annular web (16"), and releases the inlet opening (5) whose cross-section is smaller than the geometrically similar cross-section of the blocking element (14).

7. Inlet valve (12) according to one of the preceding claims, **characterized in that** the blocking element (14) is formed in the manner of a shell and comprises a convex exterior (64) which is arranged to face the throat (21) and which is further spaced from the pressing part (20) with increasing distance from the first pipetting axis (6), **and that** the shell-like blocking element (14) has a concave inner side (65) which is arranged on the side facing away from the throat (21).

8. Inlet valve (12) according to one of the preceding claims, **characterized in that** the throat (21) is arranged concentrically in relation to the first pipetting axis (6) and has a cross-section which is reduced in relation to the blocking element (14) and the pressing part (20).

9. Inlet valve (12) according to one of the preceding claims, **characterized in that** the at least one open passage region (23) is formed to proceed substantially rectangularly in relation to the first pipetting axis (6).

10. Inlet valve (12) according to one of the preceding claims, **characterized in that** the end element (4) is formed as a closable or reversibly closable lid or as a closure element of a chamber system (1) or a sample container (57), and comprises the pressing part (20), the throat (21) and the blocking element (14).

11. Inlet valve (12) according to claim 10, **characterized in that** the end element (4) which is formed as a closable lid snaps into the inlet opening (5) of a sealing lip (16') during the closing insertion into the chamber system (1) or into the sample container (57).

12. Inlet valve (12) according to claim 10 or 11, **characterized in that** the end element (4) which is formed as a closable lid is connected by means of an elastically deformable tab (25) to a collar (26) of the chamber system (1) or the sample container (57).

13. Inlet valve (12) according to claim 10, **characterized in that** end element (4) which is formed as a reversibly closable lid further comprises the spring mechanism (13) and is formed in a screwable manner for the closing insertion into the chamber system (1) or into the sample container (57).

14. Inlet valve (12) according to claim 13, **characterized in that** the pressing part (20) further comprises the spring mechanism (13).

15. Inlet valve (12) according to claim 10, **characterized in that** the end element (4) which is formed as a reversibly closable lid comprises a collar (26) which is connected by means of an elastically deformable tab (25) to the chamber system (1) or the sample container (57).

16. Inlet valve (12) according to claim 15, **characterized in that** the valve body (61) comprising the blocking element (14), the pressing part (20) and the throat (21) is connected by means of an elastically deformable tab (25) to the collar (26) of the end element (4).

17. Inlet valve (12) according to one of the preceding claims, **characterized in that** the pressing part (20) comprises stop surfaces (24) which are formed to be pressed by the spring mechanism (13;30;40).

18. Inlet valve (12) according to one of the preceding claims, **characterized in that** the spring mechanism (13) is formed as a number of upright spring elements (30) or as a number of spring rings (40).

19. Chamber system (1) for treating samples, comprising:
(a) an interior space (2) which is surrounded at least partly by an inner wall (3) and can be closed off by an end element (4);
(b) an end element (4) which comprises an inlet opening (5) leading to the interior space (2), wherein said inlet opening (5) defines a first pipetting axis (6) which penetrates the inlet opening (5);
(c) an outer chamber (7) which surrounds the interior space (2) at least in part and which is surrounded at least partly by an outer wall (8), wherein the outer wall (8) comprises a pipetting opening (9) which leads to the outer chamber (7) and which defines a second pipetting axis (10); and
(d) a transfer device (11) which is formed for the fluidic connection of the interior space (2) with the outer chamber (7),
**characterized in that** the chamber system (1) comprises an inlet valve (12) having an inlet opening (5) according to one of the preceding claims.

20. Sample container (57) for storing or treating samples, comprising:
(a) an interior space (2) which is surrounded at least partly by an inner wall (3) and can be closed off by an end element (4),
(b) an end element (4) which comprises an inlet opening (5) leading to the interior space (2), wherein said inlet opening (5) defines a first pipetting axis (6) which penetrates the inlet opening (5);
**characterized in that** the sample container (57) comprises an inlet valve (12) having an inlet opening (5) according to one of the claims 1 to 18.

21. Use of a chamber system (1) according to claim 19 or a sample container (57) according to claim 20 for the treatment of samples, wherein the treatment is selected from the group comprising chemical reactions, synthesis, incubation, lysis, extraction, solid-fluid extraction, polymerase chain reaction (PCR), storing and transporting.

## Revendications

1. Soupape d'admission (12) pour alimenter un espace intérieur (2) d'un système de chambres (1) ou récipient à échantillons (57) avec un liquide (18), la soupape d'admission (12) étant réalisée pour ajouter du liquide (18) à l'aide d'une pipette de laboratoire (19') et comprenant un premier axe de pipetage (6), la soupape d'admission (12) comprenant un orifice d'admission (5) et étant conçue pour refermer automatiquement cet orifice d'admission (5), **caractérisée en ce que** la soupape d'admission (12) comprend :
(a) un corps de soupape (61) pouvant être agencé dans l'orifice d'admission (5) et pouvant être déplacé dans la direction du premier axe de pipetage (6) entre une position de fermeture (15) et une position d'ouverture (17), comprenant :
- un élément de blocage (14) qui comprend une surface d'étanchéité (63),
- un élément de pression (20) situé à distance de l'élément de blocage (14) et pouvant être sollicité par un outil (19,19') et comprenant un passage de liquide (22) dans la zone du premier axe de pipetage (6),
- un col (21) qui raccorde entre eux l'élément de blocage (14) et l'élément de pression (20) et qui comprend au moins une zone de passage (23) ouverte laquelle débouche d'un côté dans le passage de liquide (22) de l'élément de pression (20) et de l'autre côté est conçue comme s'ouvrant dans une chambre de soupape (62) ;
(b) une chambre de soupape (62) entourant le corps de soupape (61) au moins partiellement dans la zone du col (21) ;
(c) un mécanisme à ressort (13,30,40) qui d'un côté vient s'engager au niveau de l'élément de pression (20) ou de l'élément de blocage (14) et de l'autre côté est réalisé venant s'engager au niveau d'une paroi (3) du système de chambres (1) ou au niveau d'un élément obturateur (4) du récipient à échantillons (57) ; et
(d) un élément d'étanchéité (16) qui est raccordé à une paroi intérieure (3) du système de chambres (1) ou à un élément obturateur (4) du récipient à échantillons (57),
le mécanisme à ressort (13,30,40) étant réalisé de manière que, dans la position de fermeture (15) du corps de soupape (61), il appuie la surface d'étanchéité (63) de l'élément de blocage (14) contre l'élément d'étanchéité (16), et le corps de soupape (61) de la soupape d'admission (12) étant conçu de telle façon qu'il puisse être amené dans une position d'ouverture (17) par une sollicitation de l'élément de pression (20) à l'encontre de la résistance du mécanisme à ressort (13,30,40).

2. Soupape d'admission (12) selon la revendication 1, **caractérisée en ce que** le corps de soupape (61) est fabriqué d'un seul tenant ou réalisé au moins d'un seul tenant, le col (21) du corps de soupape (61) reliant entre eux de façon rigide l'élément de blocage (14) et l'élément de pression (20) situé à distance de ce dernier, et l'élément de blocage (14), l'élément de pression (20) et le col (21) du corps de soupape (61) étant réalisés transpercés par le premier axe de pipetage (6).

3. Soupape d'admission (12) selon l'une des revendications 1 ou 2, **caractérisée en ce que** le passage de liquide (22) est agencé de façon concentrique par rapport au premier axe de pipetage (6).

4. Soupape d'admission (12) selon l'une des revendications précédentes, **caractérisée en ce que** le corps de soupape (61) est réalisé symétrique en rotation et comprend une surface d'étanchéité (63) circulaire.

5. Soupape d'admission (12) selon la revendication 4, **caractérisée en ce que** la surface d'étanchéité (63) est agencée sur un côté extérieur (64) de l'élément de blocage (14) du corps de soupape (61) et **en ce qu'**elle forme en position de fermeture (15) de la soupape d'admission (12) une fermeture étanche annulaire avec l'élément d'étanchéité (16).

6. Soupape d'admission (12) selon l'une des revendications précédentes, **caractérisée en ce que** l'élément d'étanchéité (16) est réalisé sous la forme d'une lèvre d'étanchéité (16') continue de forme annulaire ou sous la forme d'une tige annulaire continue (16") et libère l'orifice d'admission (5), la section transversale de cette dernière étant inférieure à la section transversale géométriquement semblable de l'élément de blocage (14).

7. Soupape d'admission (12) selon l'une des revendications précédentes, **caractérisée en ce que** l'élément de blocage (14) est réalisé en forme de coque et présente un côté extérieur convexe (64) qui est agencé vers le col (21) et qui est espacé d'une distance croissante depuis le premier axe de pipetage (6) vers l'élément de pression (20), **et en ce que** l'élément de blocage en forme de coque (14) présente un côté intérieur concave (65) qui est agencé du côté opposé au col (21).

8. Soupape d'admission (12) selon l'une des revendications précédentes, **caractérisée en ce que** le col (21) est agencé de façon concentrique par rapport au premier axe de pipetage (6) et présente une section transversale réduite par rapport à l'élément de blocage (14) et l'élément de pression (20).

9. Soupape d'admission (12) selon l'une des revendications précédentes, **caractérisée en ce que** la au moins une zone de passage (23) ouverte est réalisée essentiellement perpendiculaire par rapport au premier axe de pipetage (6).

10. Soupape d'admission (12) selon l'une des revendications précédentes, **caractérisée en ce que** l'élément obturateur (4) est réalisé sous la forme d'un couvercle pouvant être fermé ou réversible pouvant être fermé ou sous la forme d'une pièce de fermeture d'un système de chambres (1) ou d'un récipient à échantillons (57) et **en ce qu'**il comprend l'élément de pression (20), le col (21) et l'élément de blocage (14).

11. Soupape d'admission (12) selon la revendication 10, **caractérisée en ce que** l'élément obturateur (4) réalisé sous la forme d'un couvercle pouvant être fermé, lors de l'insertion dans le système de chambres (1) ou dans le récipient à échantillons (57) en vue de la fermeture, vient s'enclencher dans l'orifice d'admission (5) d'une lèvre d'étanchéité (16').

12. Soupape d'admission (12) selon la revendication 10 ou 11, **caractérisée en ce que** l'élément obturateur (4) réalisé sous la forme d'un couvercle pouvant être fermé est raccordé à une collerette (26) du système de chambres (1) ou du récipient à échantillons (57) à l'aide d'une languette élastiquement déformable (25).

13. Soupape d'admission (12) selon la revendication 10, **caractérisée en ce que** l'élément obturateur (4) réalisé sous la forme d'un couvercle réversible pouvant être fermé comprend en outre le mécanisme à ressort (13) et est réalisé de façon à pouvoir être vissé lors de l'insertion dans le système de chambres (1) ou dans le récipient à échantillons (57) en vue de la fermeture.

14. Soupape d'admission (12) selon la revendication 13, **caractérisée en ce que** l'élément de pression (20) comprend en outre le mécanisme à ressort (13).

15. Soupape d'admission (12) selon la revendication 10, **caractérisée en ce que** l'élément obturateur (4) réalisé sous la forme d'un couvercle réversible pouvant être fermé comprend une collerette (26) qui est raccordée au système de chambres (1) ou au récipient à échantillons (57) à l'aide d'une languette élastiquement déformable (25).

16. Soupape d'admission (12) selon la revendication 15, **caractérisée en ce que** le corps de soupape (61) comprenant l'élément de blocage (14), l'élément de pression (20) et le col (21) est raccordé à la collerette (26) d e l'élément obturateur (4) à l'aide d'une languette élastiquement déformable (25).

17. Soupape d'admission (12) selon l'une des revendications précédentes, **caractérisée en ce que** l'élément de pression (20) comprend des surfaces de butée (24) qui sont réalisées de façon à pouvoir être sollicitées par le mécanisme à ressort (13,30,40).

18. Soupape d'admission (12) selon l'une des revendications précédentes, **caractérisée en ce que** le mécanisme à ressort (13) est réalisé sous la forme d'un nombre d'éléments de ressort debout (30) ou d'un nombre de rondelles de ressort (40).

19. Système de chambres (1) pour traiter des échantillons, comprenant :
(a) un espace intérieur (2) qui est entouré au moins partiellement par une paroi intérieure (3) et qui peut être fermé avec un élément obturateur (4) ;
(b) un élément obturateur (4) qui comprend un orifice d'admission (5) conduisant à l'espace intérieur (2), cet orifice d'admission (5) définissant un premier axe de pipetage (6) qui transperce l'orifice d'admission (5) ;
(c) un espace extérieur (7) entourant au moins partiellement l'espace intérieur (2) qui est entouré au moins partiellement d'une paroi extérieure (8), la paroi extérieure (8) comprenant une ouverture de pipetage (9) conduisant à l'espace extérieur (7) qui définit un deuxième axe de pipetage (10) ; et
(d) un dispositif de transfert (11) qui est réalisé pour relier fluidiquement l'espace intérieur (2) et l'espace extérieur (7),
**caractérisé en ce que** le système de chambres (1) comprend une soupape d'admission (12) comprenant l'orifice d'admission (5) selon l'une des revendications précédentes.

20. Récipient à échantillons (57) pour conserver ou traiter des échantillons, comprenant :
(a) un espace intérieur (2) entouré au moins partiellement par une paroi intérieure (3) et qui peut être fermé par un élément obturateur (4) ;
(b) un élément obturateur (4) qui comprend un orifice d'admission (5) conduisant à l'espace intérieur (2), cet orifice d'admission (5) définissant un premier axe de pipetage (6) qui transperce l'orifice d'admission (5) ;
**caractérisé en ce que** le récipient à échantillons (57) comprend une soupape d'admission (12) comprenant l'orifice d'admission (5) selon l'une des revendications 1 à 18.

21. Utilisation d'un système de chambres (1) selon la revendication 19 ou d'un récipient à échantillons (57) selon la revendication 20 pour traiter des échantillons, le traitement étant choisi à partir d'un groupe comprenant des réactions chimiques, une synthèse, une incubation, une lyse, une extraction, une extraction solide-liquide, une réaction d'amplification en chaîne par polymérase (PCR), la conservation et le transport.
